# EUROPEAN PATENT APPLICATION

(11) **EP 4 845 190 A1**
(43) Date of publication of application: **25.11.2026**
(21) Application number: 25751157.6
(22) Date of filing: 20.01.2025
(51) Int. Cl.: H04W 8/14

(54) **COMMUNICATION METHOD AND APPARATUS**

(30) Priority: 05.02.2024 CN 202410171399
(71) Applicant: Huawei Technologies Co., Ltd., Shenzhen, Guangdong 518129 (CN)
(72) Inventor: WEN, Mengsha, Shenzhen, Guangdong 518129 (CN); LI, Hancheng, Shenzhen, Guangdong 518129 (CN); WU, Wenfu, Shenzhen, Guangdong 518129 (CN); QI, Caixia, Shenzhen, Guangdong 518129 (CN)
(74) Representative: Huawei European IPR
(86) International application number: PCT/CN2025/073379
(87) International publication number: WO 2025/167555

(57) **Abstract**

This application provides a communication method and apparatus. The method includes: A first network element receives a first message from a second network element, and then may send a second message to a third network element, where the first message includes a policy for accessing a local service by a terminal device, the second network element is configured to manage a local user plane function network element, the second message is used to configure a classifier policy corresponding to the local service, and the classifier policy is determined according to the policy for accessing the local service by the terminal device. The second network element performs intra-domain user plane management and user policy management. In this way, direct management of a centralized control plane can be avoided, so that when user services are deployed/provisioned/changed in the domain, the centralized control plane may not perceive deployment/provision/change of local service policies or local service logic, to effectively reduce management complexity of the centralized control plane.

## Description

### CROSS-REFERENCE TO RELATED APPLICATIONS

This application claims priority to Chinese Patent Application No. 202410171399.3, filed with the China National Intellectual Property Administration on February 5, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

It is defined in the 3rd generation partnership project (3rd generation partnership project, 3GPP) that edge computing can enable operators and third-party services to be closer to access points of terminal devices (such as user equipment (UE)), to improve service efficiency and reduce a transmission delay. Nearby routing in a local subnet can be selected based on edge computing.

To start an edge application server, a terminal device needs to know an address (for example, an internet protocol (internet protocol, IP) address) of an application server that provides a service. The terminal device may initiate an edge application server (edge application server, EAS) discovery procedure to obtain an address of an appropriate EAS, so that traffic can be locally routed to the edge application server.

The 3GPP defines an edge application server discovery function (edge application server discovery function, EASDF) and uses a domain name system (domain name system, DNS) to implement EAS discovery. First, the terminal device initiates a DNS query request, where the DNS query request is sent to the EASDF network element via a user plane function (user plane function, UPF) network element. Then, the EASDF network element sends the DNS query request to a corresponding DNS server according to a DNS message processing rule (a DNS message processing rule generated by a session management function (session management function, SMF) based on edge server deployment information) configured by the SMF network element for the EASDF network element, a fully qualified domain name (or may be referred to as a fully qualified domain name) (fully qualified domain name, FQDN) of DNS query, and a location of the terminal device. After obtaining an address of an optimal EAS through query, the DNS server sends the address of the optimal EAS to the EASDF, and the EASDF sends the address of the optimal EAS to the SMF. Then, the SMF determines, based on the edge server deployment information (for example, a data network name (data network name, DNN), single network slice selection assistance information (single network slice selection assistance information, S-NSSAI), an application identifier, the FQDN, DNS server information, and address range information of the optimal EAS), to insert a local uplink classifier UPF (uplink classifier UPF, UL CL UPF) network element and a local protocol data unit (protocol data unit, PDU) session anchor UPF (local PDU session anchor UPF, L-PSA UPF) network element that correspond to the address of the optimal EAS. A classifier capability of the UL CL UPF network element may be used to classify edge traffic on a PDU session to a local EAS. After a local classifier user plane path is inserted, the EASDF network element may return a DNS query result to the terminal device, so that the terminal device implements an optimal edge user plane path to perform an edge computing service.

However, when a large quantity of applications are deployed at an edge, all DNS requests of users are centrally processed by the SMF network element and the EASDF network element. In this case, if local user policies are updated or modified, a centralized control plane is updated, resulting in specific impact on the centralized control plane and a significant increase in management complexity of the centralized control plane.

### SUMMARY

This application provides a communication method and apparatus, to cause a centralized control plane not to perceive deployment/provision/change of local service policies or local service logic, so as to reduce management complexity of the centralized control plane.

According to a first aspect, this application provides a communication method. The method may be performed by a first network element or a module (for example, a processor, a processing unit, a chip, a chip system, or a circuit) of the first network element. Optionally, the method may alternatively be implemented by a logical node, a logical module, or software that can implement all or a part of functions of the first network element. For example, the following uses an example in which the first network element performs the communication method. The method may include the following steps: The first network element may receive a first message from a second network element, and then the first network element may send a second message to a third network element, where the first message includes a policy for accessing a local service by a terminal device, the second network element is configured to manage a local user plane function network element, the second message is used to configure a classifier policy corresponding to the local service, and the classifier policy is determined according to the policy for accessing the local service by the terminal device.

In this method, the second network element performs intra-domain (or may be referred to as local) user plane management and user policy management. In this way, direct management of a centralized control plane can be avoided, so that when user services (which may be understood as local services) are deployed/provisioned/changed in the domain, the centralized control plane may not perceive deployment/provision/change of local service policies or local service logic, to effectively decrease (or reduce) management complexity of the centralized control plane.

Correspondingly, according to a second aspect, this application provides a communication method. The method may be performed by a second network element or a module (for example, a processor, a processing unit, a chip, a chip system, or a circuit) of the second network element. Optionally, the method may alternatively be implemented by a logical node, a logical module, or software that can implement all or a part of functions of the second network element. For example, the following uses an example in which the second network element performs the communication method. The method may include the following steps: The second network element sends a first message to a first network element, where the first message includes a policy for accessing a local service by a terminal device; and the second network element is configured to manage a local user plane function network element.

For technical effects that can be achieved in the second aspect, refer to the technical effects that can be achieved in the first aspect. Details are not described herein again.

Correspondingly, according to a third aspect, this application provides a communication method. The method may be performed by a third network element or a module (for example, a processor, a processing unit, a chip, a chip system, or a circuit) of the third network element. Optionally, the method may alternatively be implemented by a logical node, a logical module, or software that can implement all or a part of functions of the third network element. For example, the following uses an example in which the third network element performs the communication method. The method may include the following step: The third network element receives a second message from a first network element, where the second message is used to configure a classifier policy for accessing a local service by a terminal device.

For technical effects that can be achieved in the third aspect, refer to the technical effects that can be achieved in the first aspect. Details are not described herein again.

In a possible implementation provided in the first aspect, when the policy for accessing the local service by the terminal device includes the classifier policy corresponding to the local service, the second message may include the classifier policy corresponding to the local service; or when the policy for accessing the local service by the terminal device does not include the classifier policy corresponding to the local service, the first network element may create, according to the policy for accessing the local service by the terminal device, the classifier policy corresponding to the local service.

In the foregoing implementation, a manner of determining the classifier policy is flexible, and can meet requirements in different cases.

In a possible implementation provided in the first aspect or the second aspect, before receiving the first message from the second network element, the method further includes: The first network element receives session information of the terminal device from a fourth network element; and then the first network element may send a third message to the second network element based on information that is about the second network element and that is included in the session information of the terminal device, where the third message is used to obtain (or request) the policy for accessing the local service by the terminal device. Correspondingly, after receiving the third message, the second network element may send the first message to the first network element based on the third message.

In the foregoing implementation, the first network element establishes a communication connection to the second network element based on the information about the second network element, and requests, from the second network element after the communication connection is established, the policy for accessing the local service by the terminal device. The second network element is responsible for intra-domain (or may be referred to as local) user plane management and user policy management.

In a possible implementation provided in the first aspect, before receiving the session information of the terminal device from the fourth network element, the method further includes: The first network element sends a first subscription message to the fourth network element, where the first subscription message is used to subscribe to the session information of the terminal device.

In the foregoing implementation, after the first network element subscribes to the related session information (for example, the information (for example, an identifier) about the second network element) of the terminal device from the fourth network element, the fourth network element may perform a session creation request when the terminal device goes online or update registration information of the second network element (for example, identification information of the second network element) in the fourth network element; or when the second network element configured to provide a corresponding service for the terminal device is newly registered with the fourth network element, the fourth network element sends the related session information of the terminal device to the first network element. In this way, the first network element can obtain the related session information of the terminal device in a timely manner, so that the first network element can establish a communication connection to the second network element in a timely and accurate manner based on the information about the second network element.

In a possible implementation provided in the first aspect, the method further includes: If the policy for accessing the local service by the terminal device does not include an addressing policy corresponding to the local service, and no fifth network element is selected for a session of the terminal device, the first network element may select a fifth network element for the session of the terminal device. Then, the first network element may send a fourth message to the fifth network element, and then the first network element may send address information of the fifth network element to the terminal device, where the fourth message is used to configure the addressing policy corresponding to the local service, the addressing policy is generated according to the policy for accessing the local service by the terminal device, and the address information is used by the terminal device to subsequently perform domain name query.

In the foregoing implementation, the first network element selects the fifth network element based on related information (for example, one or more of a fifth network element list, the information about the second network element (for example, a service range of the second network element), a data network name, single network slice selection assistance information, a data network access identifier, or a location of the terminal device) provided by the second network element, and configures the addressing policy, a DNS processing policy, and the like for the fifth network element, so that the fifth network element can effectively provide a corresponding service for the session of the terminal device in a timely manner. It may be understood that the addressing policy configured for the fifth network element is created according to the policy for accessing the local service by the terminal device from the second network element.

In a possible implementation provided in the first aspect, the method further includes: The first network element receives a fifth message from the fifth network element, where the fifth message may include address information of a first application server, and the address information of the first application server is obtained through domain name query initiated by the terminal device; and then the first network element may determine the third network element based on the fifth message.

In the foregoing implementation, when the policy for accessing the local service by the terminal device does not include the addressing policy corresponding to the local service, or the policy for accessing the local service by the terminal device does not include the classifier policy corresponding to the local service, the first network element may trigger selection of the third network element based on the fifth message from the fifth network element. In this way, effective selection of the third network element can be implemented.

In a possible implementation provided in the first aspect, the method further includes: If the policy for accessing the local service by the terminal device includes the classifier policy corresponding to the local service, the first network element may effectively determine the third network element in a timely manner according to the classifier policy.

In a possible implementation provided in the first aspect, the method further includes: The first network element sends first information to the second network element, the first network element may receive second information from the second network element, and then the first network element may send third information to the third network element, where the first information is used to request to allocate an uplink tunnel identifier of a sixth network element, the first information may include a downlink tunnel identifier of the third network element, the sixth network element is a local user plane function network element, the second information may include the uplink tunnel identifier of the sixth network element, the third information may include the uplink tunnel identifier of the sixth network element, and the downlink tunnel identifier of the third network element and the uplink tunnel identifier of the sixth network element may be used to establish a first user plane tunnel corresponding to the local service between the third network element and the sixth network element.

Correspondingly, in a possible implementation provided in the second aspect, the method further includes: The second network element receives first information from the first network element, and may send sixth information to a sixth network element, the second network element may receive seventh information from the sixth network element, and then the second network element may send second information to the first network element, where the first information may be used to request to allocate an uplink tunnel identifier of the sixth network element, the first information may include a downlink tunnel identifier of a third network element, the sixth network element is a local user plane function network element, the sixth information may be used to request to allocate the uplink tunnel identifier of the sixth network element, the sixth information may include the downlink tunnel identifier of the third network element, the seventh information may include the uplink tunnel identifier of the sixth network element, the second information may include the uplink tunnel identifier of the sixth network element, and the downlink tunnel identifier of the third network element and the uplink tunnel identifier of the sixth network element may be used to establish a first user plane tunnel corresponding to the local service between the third network element and the sixth network element.

Correspondingly, in a possible implementation provided in the third aspect, the method further includes: The third network element receives third information from the first network element, where the third information may include an uplink tunnel identifier of a sixth network element, and the uplink tunnel identifier of the sixth network element is used to establish a first user plane tunnel corresponding to the local service between the third network element and the sixth network element.

In the foregoing implementation, because the second network element is responsible for intra-domain user plane management (for example, management of the sixth network element), the second network element assists in establishing the user plane tunnel, so that the user plane tunnel can be established more efficiently. In addition, in a user plane tunnel establishment process, a centralized control plane does not need to directly manage the sixth network element, so that management complexity of the centralized control plane can be reduced.

In a possible implementation provided in the first aspect, the method further includes: The first network element may send fourth information to the third network element, the first network element may receive fifth information from the third network element, and if the fifth information includes an updated uplink tunnel identifier of the third network element, the first network element may send the updated uplink tunnel identifier of the third network element to an access network device, where the fourth information may include a downlink tunnel identifier of the access network device, the downlink tunnel identifier of the access network device and the updated uplink tunnel identifier of the third network element are used to establish a second user plane tunnel corresponding to the local service between the access network device and the third network element.

Correspondingly, in a possible implementation provided in the third aspect, the method further includes: The third network element receives fourth information from the first network element, and then the third network element may send fifth information to the first network element, where the fourth information may include a downlink tunnel identifier of an access network device, the fifth information may include an uplink tunnel identifier of the third network element or an updated uplink tunnel identifier of the third network element, and the downlink tunnel identifier of the access network device and the uplink tunnel identifier of the third network element or the updated uplink tunnel identifier of the third network element may be used to establish a second user plane tunnel corresponding to the local service between the access network device and the third network element.

In the foregoing implementation, the downlink tunnel identifier of the access network device is provided for the third network element, so that the third network element can return the uplink tunnel identifier of the third network element, or if the uplink tunnel identifier of the third network element is updated, the updated uplink tunnel identifier of the third network element is returned. In this way, the access network device can establish, based on the uplink tunnel identifier (or the updated uplink tunnel identifier) of the third network element, the user plane tunnel corresponding to the local service with the third network element. Therefore, local service data transmission can be effectively performed between the access network device and the third network element in a timely manner.

In a possible implementation provided in the second aspect, the method further includes: The second network element selects a fifth network element, the second network element may send a sixth message to the fifth network element, and then the second network element may send a seventh message to the first network element, where the sixth message may be used to configure an addressing policy corresponding to the local service, the addressing policy is included in the policy for accessing the local service by the terminal device, the seventh message may include identification information and/or address information of the fifth network element, and the identification information and/or the address information of the fifth network element may be used to establish a communication connection between the first network element and the fifth network element.

In the foregoing implementation, the second network element selects the fifth network element based on related information (for example, one or more of a fifth network element list, information about the second network element (for example, a service range of the second network element), a data network name, single network slice selection assistance information, a data network access identifier, or a location of the terminal device) corresponding to a session of the terminal device, and configures the addressing policy, a DNS processing policy, and the like for the fifth network element, so that the fifth network element can effectively provide a corresponding service for the session of the terminal device in a timely manner. In this way, in this implementation, the second network element completes corresponding configuration of the fifth network element, to help reduce management complexity of a centralized control plane.

In a possible implementation provided in the second aspect, sending the first message to the first network element includes: The second network element sends a second subscription message to a fourth network element, the second network element receives session information of the terminal device from the fourth network element, and then the second network element may send the first message to the first network element based on information about the first network element, where the second subscription message is used to subscribe to the session information of the terminal device, and the session information of the terminal device includes the information about the first network element configured to provide a service for the terminal device.

In the foregoing implementation, after the second network element subscribes to the related session information (for example, the information (for example, an identifier) about the first network element) of the terminal device from the fourth network element, the fourth network element may perform a session creation request when the terminal device goes online or update registration information of the first network element (for example, identification information of the first network element) in the fourth network element; or when the first network element configured to provide a corresponding service for the terminal device is newly registered with the fourth network element, the fourth network element sends the related session information of the terminal device to the second network element. In this way, the second network element can obtain the related session information of the terminal device in a timely manner, so that the second network element can establish a communication connection to the first network element in a timely and accurate manner based on the information about the first network element.

In a possible implementation provided in the second aspect, the method further includes: The second network element sends an eighth message to the fourth network element, where the eighth message may include information about the second network element and identification information of the terminal device, and the eighth message is used to trigger establishment of a communication connection between the second network element and the first network element.

In the foregoing implementation, the second network element actively registers related information (for example, corresponding information included in the eighth message) of the second network element with the fourth network element, so that the fourth network element can send the related session information (for example, the information about the second network element) of the terminal device to the first network element in a timely manner when the related information of the second network element registered by the second network element is stored in the fourth network element or when the terminal device goes offline and then goes online again to perform a session creation request.

According to a fourth aspect, this application provides a communication apparatus. The communication apparatus can implement the method in any one of the possible implementations of the first aspect to the third aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus in performing a corresponding function of the first network element, the second network element, the third network element, the fourth network element, the fifth network element, the sixth network element, the seventh network element, the eighth network element, the access network device, or the terminal device in the foregoing methods. The communication apparatus further includes a memory, and the memory may be coupled to the processor, and stores program instructions and data that are necessary for the communication apparatus. Optionally, the communication apparatus further includes a communication interface. The communication interface is configured to support communication between the communication apparatus and another device.

In a possible implementation, the communication apparatus includes corresponding functional modules configured to implement the steps in the foregoing methods. The function may be implemented by hardware, or may be implemented by executing corresponding software by hardware. The hardware or software includes one or more modules corresponding to the foregoing functions. For example, the communication apparatus includes a corresponding means (means) or module configured to perform the method in the first aspect, the second aspect, or the third aspect. For example, the communication apparatus includes a processing module (which may alternatively be referred to as a processing unit) and/or a transceiver module (which may alternatively be referred to as a communication unit, a communication module, or a transceiver unit, configured to send and receive data). The transceiver module can implement a sending function and a receiving function. When implementing the sending function, the transceiver module may be referred to as a sending unit (which may alternatively be referred to as a sending module). When implementing the receiving function, the transceiver module may be referred to as a receiving unit (which may alternatively be referred to as a receiving module). The sending unit and the receiving unit may be a same functional unit, the functional unit is referred to as a transceiver module, and the functional unit can implement the sending function and the receiving function. Alternatively, the sending unit and the receiving unit may be different functional units, and the transceiver module is a general term for these functional units. These modules (units) may perform a corresponding function in the method example in the first aspect, the second aspect, or the third aspect. For details, refer to the detailed descriptions in the method examples. Details are not described herein again.

In a possible implementation, a structure of the communication apparatus includes a transceiver module and a processing module. The modules may perform corresponding functions in the foregoing method examples. For details, refer to the descriptions in the method in any one of the possible implementations of the first aspect to the third aspect. Details are not described herein again.

According to a fifth aspect, this application further provides a communication apparatus. The communication apparatus includes a processor and a communication interface. The communication interface is configured to receive a signal from a communication apparatus other than the communication apparatus and transmit the signal to the processor, or send the signal from the processor to a communication apparatus other than the communication apparatus. The processor implements the method in any one of the possible implementations of the first aspect to the third aspect by using a logic circuit or executing a computer program or instructions. Optionally, the communication apparatus further includes a memory, and the memory is configured to store the computer program or the instructions.

According to a sixth aspect, this application provides a communication system. The communication system includes a plurality of communication apparatuses (for example, a plurality of apparatuses among the first network element, the second network element, the third network element, the fourth network element, the fifth network element, the sixth network element, the seventh network element, the eighth network element, the access network device, or the terminal device). For implementation of related functions of the first network element, the second network element, the third network element, the fourth network element, the fifth network element, the sixth network element, the seventh network element, the eighth network element, the access network device, or the terminal device, refer to related descriptions mentioned in the first aspect, the second aspect, or the third aspect. Details are not described herein again.

According to a seventh aspect, this application provides a computer program product. The computer program product includes a computer program or instructions, and when the computer program or the instructions are run on a computer, the computer is caused to perform the method in any one of the possible implementations of the first aspect to the third aspect.

According to an eighth aspect, this application provides a computer-readable storage medium. The computer-readable storage medium stores a computer program or instructions, and when the computer program or the instructions are executed by a computer, the computer is caused to perform the method in any one of the possible implementations of the first aspect to the third aspect.

According to a ninth aspect, this application provides a chip. The chip may include a processor, and may further include a memory (or the chip is coupled to a memory), and the chip executes program instructions in the memory, to perform the method in any one of the possible implementations of the first aspect to the third aspect. "Coupling" means that two components are directly or indirectly combined with each other. For example, coupling may mean an electrical connection between the two components.

According to a tenth aspect, this application further provides a chip system. The chip system includes a processor, configured to support a computer apparatus in implementing the method in any one of the possible implementations of the first aspect to the third aspect. In a possible implementation, the chip system further includes a memory. The memory is configured to store a program and data that are necessary for the computer apparatus. The chip system may include a chip, or may include a chip and another discrete component.

Based on the implementations provided in the foregoing aspects, this application may further combine technologies in this application to provide more implementations.

### BRIEF DESCRIPTION OF DRAWINGS

FIG. 1a shows an example of a diagram of an architecture of a possible communication system according to an embodiment of this application;
FIG. 1b shows an example of a diagram of an architecture of another possible communication system according to an embodiment of this application;
FIG. 2 shows an example of a schematic flowchart of a communication method according to an embodiment of this application;
FIG. 3 shows an example of a diagram of a possible application scenario according to an embodiment of this application;
FIG. 4a and FIG. 4b show an example of a schematic flowchart of another communication method according to an embodiment of this application;
FIG. 5a and FIG. 5b show an example of a schematic flowchart of still another communication method according to an embodiment of this application;
FIG. 6 shows an example of a diagram of a structure of a communication apparatus according to an embodiment of this application; and
FIG. 7 shows an example of a diagram of a structure of another communication apparatus according to an embodiment of this application.

### DESCRIPTION OF EMBODIMENTS

Before technical solutions provided in this application are described, some terms in this application are first explained and described, to facilitate understanding by a person skilled in the art.
(1) An EAS provides a channel for a user to access a network and can communicate with another server. Generally, an edge application server can be a group of servers that implement a single function, such as a firewall server, a high-speed cache server, a load balancing server, and a DNS server. For an internet of things, due to continuous development of edge computing technologies, much control may be implemented by a local device instead of being handed over to a cloud, and a processing process is completed at a local edge computing layer, to greatly improve processing efficiency and reducing load on the cloud. Because the EAS is closer to the user, the EAS can also provide the user with a faster response and resolve requirements at an edge end.
(2) A protocol data unit (protocol data unit, PDU) session (session) is a logical connection between a terminal device and a data network (data network, DN), and provides a user plane connection between the terminal device and a DN for the terminal device. The PDU session includes a session from the terminal device to an access network device, a session from the access network device to a user plane function (user plane function, UPF) network element, and a session from the UPF network element to the DN. One PDU session includes at least one quality of service (quality of service, QoS) flow.
(3) Edge computing (edge computing, EC) refers to a distributed open platform (architecture) that integrates a network edge near objects or data sources and core capabilities of networks, computing, storage, and applications, provides edge intelligence services nearby, and meets key requirements of industry digitalization in terms of agility, real-time services, data optimization, application intelligence, security, and privacy protection. The edge computing can serve as a bridge between the physical and the digital world, to enable smart assets, smart gateways, smart systems, and smart services. Currently, the edge computing includes three different paradigms: open edge computing (cloudlets of open edge computing), fog computing (fog computing of openFog consortium), and mobile edge computing (mobile edge computing, MEC) to multi-access edge computing (multi-access edge computing, MEC). The open edge computing can be connected to a cloud through a limited internet and has a powerful computing capability to efficiently process tasks from different mobile devices. In addition, it is very close to the mobile devices. The fog computing is to distribute resources and services such as computing, storage, network, control, and decision-making to any location of the cloud and things, and is mainly used to meet requirements of service scenarios such as an internet of things (internet of things, IoT), artificial intelligence (artificial intelligence, AI), virtual reality, and 5th generation (5th generation, 5G) mobile communication technologies. The mobile edge computing to multi-access edge computing can run applications inside a wireless base station to provide a service for a mobile user.
(4) An edge hosting environment (edge hosting environment, EHE): The edge hosting environment (edge hosting environment, EHE) in embodiment of this application may be an environment that needs to be supported for execution of an edge application server EAS. In an EC scenario, an application or a service in a network may be deployed on an edge hosting environment EHE, and the EHE may manage the application or the service.

It should be noted that in embodiments of this application, "sending a message (or information)" may be understood as meaning that a device sends a message (or information) to another device, or may be understood as meaning that a logical module in a device sends a message (or information) to another logical module. For example, "a first network element sends a message" may be understood as meaning that the first network element sends a message to another device (for example, a second network element), or may be understood as meaning that a logical module 1 in the first network element sends a message to a logical module 2 in the second network element.

In embodiments of this application, "receiving a message (or information)" may be understood as meaning that a device receives a message (or information) from another device, or may be understood as meaning that a logical module in a device receives a message (or information) from another logical module. For example, "the first network element receives a message" may be understood as meaning that the first network element receives a message from another device (for example, the second network element), or may be understood as meaning that the logical module 1 in the first network element receives a message from the logical module 2 in the second network element.

In embodiments of this application, "sending a message (or information) to the second network element" may be understood as meaning that a destination end of the message (or information) is the second network element. The method may include directly or indirectly sending a message (or information) to the second network element. "Receiving a message (or information) from the second network element" may be understood as meaning that a source end of the message (or information) is the second network element, and may include directly or indirectly receiving the message (or information) from the second network element. A message (or information) may be processed between a source end and a destination end of sending the message (or information), for example, a format change, but the destination end may understand a valid message from the source end. A similar expression in embodiments of this application may be understood similarly. Details are not described herein again.

The following describes in detail embodiments of this application with reference to accompanying drawings.

The following describes an architecture of a communication system to which a communication method provided in this application is applicable. It should be noted that these descriptions are for ease of understanding by a person skilled in the art, and are not intended to limit the protection scope claimed by this application.

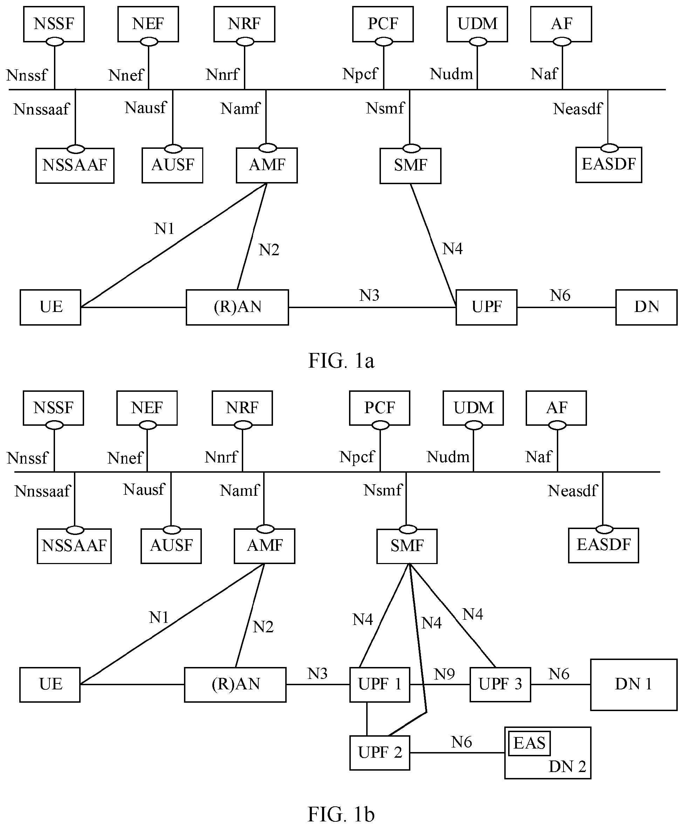

FIG. 1a shows an example of a diagram of an architecture of a possible communication system to which an embodiment of this application is applicable. The communication system architecture shown in FIG. 1a is a 5G communication system architecture defined in the 3rd generation partnership project (3rd generation partnership project, 3GPP) standard. The communication system architecture includes a terminal device (for example, user equipment (user equipment, UE)), an access network (access network, AN) (for example, a radio access network (radio access network, RAN)), a core network (Core network, CN), and a data network. Optionally, the terminal device may be connected to an access network device (for example, a (R)AN device) in a wireless manner, and the access network device may be connected to a core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and access network devices may be connected to each other in a wired or wireless manner. For example, the architecture of the communication system may further include another network device (for example, a wireless relay device or a wireless backhaul device).

The following briefly describes functions of some devices included in the architecture of the communication system.

The terminal device is an entity that has a signal sending and receiving function on a user side, and may provide service functions such as video, voice, and data connectivity for a user. For example, the terminal device is an entrance for a mobile user to interact with a network, and can provide a basic computing capability and storage capability, display a service window to the user, and receive an operation input of the user. A next generation terminal device (NextGen UE) may establish a signal connection and a data connection to the access network device by using a new radio technology, to transmit a control signal and service data to the mobile network.

Optionally, the terminal device may also be referred to as a terminal, user equipment (user equipment, UE), an access terminal device, a vehicle-mounted terminal, an industrial control terminal, a UE unit, a UE station, a mobile station (mobile station, MS), a mobile terminal (mobile terminal, MT), a remote station, a remote terminal device, a mobile device, a UE terminal device, a terminal device, a wireless communication device, a UE agent, a UE apparatus, or the like. In embodiments of this application, the terminal device may be at a fixed location, or may be mobile. This is not limited in implementations of this application. Optionally, the terminal device may be deployed on land, including indoor, outdoor, handheld, or vehicle-mounted, may be deployed on water (for example, on a ship), or may be deployed in air (for example, on an airplane, a balloon, or a satellite).

For example, the terminal device may be a mobile phone (mobile phone), a tablet computer (Pad), a subscriber unit (subscriber unit), a cellular phone (cellular phone), a smartphone (smartphone), a wireless data card, a personal digital assistant (Personal Digital Assistant, PDA) computer, a wireless modem (modem), a handheld device (handset), a laptop computer (laptop computer), a computer with a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, a vehicle, an unmanned aerial vehicle, a helicopter, an airplane, a factory machine/device, a machine type communication (Machine Type Communication, MTC) terminal, a ship, or a robot. For example, the vehicle may include but is not limited to: a smart car (smart car or intelligent car), a digital car (digital car), an unmanned car (unmanned car or driverless car or pilotless car or automobile), an automatic car (self-driving car or autonomous car), a pure electric vehicle (pure EV or Battery EV), a hybrid vehicle (hybrid electric vehicle, HEV), a range extended electric vehicle (range extended EV, REEV), a plug-in hybrid vehicle (plug-in HEV, PHEV), a new energy vehicle (new energy vehicle), and the like. A specific technology and a specific device form that are used by the terminal device are not limited in embodiments of this application.

The access network device is a device that enables the terminal device to access a wireless network. An access network device may also be referred to as an access network apparatus, a radio access network device, a (R)AN entity, a network device, an access node, a (R)AN node, a (R)AN device, or the like. For example, the access network device may provide a network access function for an authorized user in a specific area, and may determine, based on a user level, a service requirement, and the like, transmission tunnels of different quality to transmit user data. The access network device can manage resources of the access network device, properly use the resources, provide an access service for the terminal device as required, and is responsible for forwarding the control signal and the user data between the terminal device and the core network.

For example, the access network device may include but is not limited to: a next generation NodeB (next generation NodeB, gNB) in a 5G communication system, a next generation base station in a 6th generation (6th generation, 6G) communication system, a base station in a future communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB or a home NodeB, HNB), a baseband unit (baseband unit, BBU), or a wireless fidelity (wireless fidelity, Wi-Fi) access point (access point, AP).

Optionally, in a network structure, the access network device may further include a central unit (central unit, CU) or a distributed unit (distributed unit, DU). In this structure, protocol layers of the access network device may be split. Functions of a part of protocol layers are centrally controlled by the CU, functions of a part or all of the remaining protocol layers are distributed in the DU, and the CU centrally controls the DU. For example, functions of a packet data convergence protocol (packet data convergence protocol, PDCP) layer and a higher protocol layer may be disposed on the CU, and functions of protocol layers below the PDCP layer (for example, an RLC layer and a medium access control (medium access control, MAC) layer) are disposed on the DU. It should be noted that such protocol layer division is merely an example, and division may alternatively be performed at another protocol layer. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user plane CU entity (CU-UP entity).

For example, the access network device is a base station. The base station may communicate with the terminal device, or may communicate with the terminal device via a relay station. The terminal device may communicate with a plurality of base stations in different access technologies.

In embodiments of this application, the access network device may be a macro base station, a micro base station or an indoor base station, a relay node or a donor node, or the like. A specific technology and a specific device form that are used by the radio access network device are not limited in embodiments of this application.

The data network is a data network that provides a service for a user. Generally, a client is located in the terminal device, and a server is located in the data network. A data network may be a private network, for example, a local area network, may be an external network that is not managed and controlled by an operator, for example, an internet (Internet), or may be a dedicated network jointly deployed by operators, for example, a network that provides an IP multimedia network subsystem (IP multimedia core network subsystem, IMS) service.

A core network is responsible for maintaining subscription data of the mobile network, managing a network element of the mobile network, and providing functions such as session management, mobility management, policy management, and security authentication for the terminal device. The core network provides network access authentication for the terminal device when the terminal device is attached; allocates a network resource to the terminal device when the terminal device has a service request; updates a network resource for the terminal device when the terminal device moves; provides a quick recovery mechanism for the terminal device when the terminal device is idle; releases a network resource for the terminal device when the terminal device is detached; and provides a data routing function for the terminal device when the terminal device has service data, for example, forwards uplink data to the data network, or receives downlink data of the terminal device from the data network and forwards the downlink data to the access network device, so that the access network device sends the downlink data to the terminal device. Optionally, in terms of function logic, network elements of the core network may be divided into two parts: a user plane network element (or may be referred to as a user plane function network element or a user plane function entity) and a control plane network element. The user plane network element is responsible for transmission of service data. For example, the user plane network element may include but is not limited to a UPF network element. The control plane network element is responsible for management of a mobile network. For example, the control plane may include but is not limited to an access and mobility management function (access and mobility management function, AMF) network element (or may be referred to as an entity), a session management function (session management function, SMF) network element, a unified data management (unified data management, UDM) network element (or a unified data repository (unified data repository, UDR) network element), a policy control function (policy control function, PCF) network element, an AF network element, an authentication server function (authentication server function, AUSF) network element, and a network slice selection function (network slice selection function, NSSF) network element. Certainly, the core network may further include other network elements (for example, a network exposure function (network exposure function, NEF) network element, a network repository function (network repository function, NRF) network element, a network slice-specific authentication and authorization function (network slice-specific authentication and authorization function, NSSAAF) network element, or an edge application server discovery function (edge application server discovery function, EASDF) network element), which are not enumerated one by one herein.

Optionally, a service-oriented architecture is used on the control plane of the core network. Interaction between the control plane network elements uses a service invoking mode to replace a point-to-point communication mode in a conventional architecture. In the service-oriented architecture, the control plane network element exposes a service to another control plane network element, so that the another control plane network element invokes the service. In point-to-point communication, a communication interface between control plane network elements stores a set of specific messages, and the messages can be used only by control plane network elements at two ends of the interface during communication.

The following briefly describes functions of some network elements included in the core network.
(1) The SMF network element is mainly used for session management, IP address allocation and management for a terminal device, selection of a manageable user equipment plane function, a termination point of an interface toward a policy control or charging function, downlink data notification, and the like. For example, the SMF network element may complete procedures related to a protocol data unit (protocol data unit, PDU) session, such as establishment, release, and update. In a 5G communication system, a session management network element may be the SMF network element. In a future communication system such as a 6th generation (6th generation, 6G) communication system, a session management function network element may still be the SMF network element or have another name. This is not limited in this application. Nsmf is a service-oriented interface provided by the SMF network element. The SMF network element may communicate with another network function through Nsmf.
(2) The AMF network element is mainly used for mobility management, access management, and the like. For example, the AMF network element may receive non-access stratum (non-access stratum, NAS) signaling (including mobility management (mobility management, MM) signaling and session management (session management, SM) signaling) of a terminal device and related signaling of an access network device (for example, N2 signaling at a base station granularity exchanged with the AMF network element), and complete a user registration procedure, SM signaling forwarding, and mobility management. For example, the AMF network element may be a mobility management entity (mobility management entity, MME) in a 4th generation (4th generation, 6G) communication system or an AMF network element in a 5G communication system. In a future communication system such as a 6G communication system, an access management network element may still be the AMF network element or have another name. This is not limited in this application. Namf is a service-oriented interface provided by the AMF network element. The AMF network element may communicate with another network function through Namf.
(3) The UDM network element is used for user identification handling, subscription, access authentication, registration, mobility management, or the like. In a 5G communication system, a data management network element may be the UDM network element. In a future communication system such as a 6G communication system, a data management network element may still be the UDM network element or have another name. This is not limited in this application. Nudm is a service-oriented interface provided by the UDM network element. The UDM network element may communicate with another network function through Nudm.
(4) The PCF network element supports a unified policy framework used to govern network behavior, and provides policy rule information (for example, a mobility related policy, a PDU session related policy (for example, a quality of service (quality of service, QoS) policy or a charging policy), or a slice selection policy) for a control plane function network element (for example, the AMF or the SMF). In a 5G communication system, a policy control network element may be the PCF network element. In a future communication system such as a 6G communication system, a policy control network element may still be the PCF network element or have another name. This is not limited in this application. Npcf is a service-oriented interface provided by the PCF network element. The PCF network element may communicate with another network function through Npcf.
(5) The AF network element is used for application influence on traffic routing, accessing a network exposure function, interacting with a policy framework for policy control, or the like. In a 5G communication system, an application network element may be the AF network element. In a future communication system such as a 6G communication system, an application network element may still be the AF network element or have another name. This is not limited in this application. Naf is a service-oriented interface provided by the AF. The AF network element may communicate with another network function through Naf.
(6) The UPF network element is used for packet routing and forwarding, QoS handling for user plane data, or the like. In a 5G communication system, a user plane function network element may be the UPF network element. In a future communication system such as a 6G communication system, a user plane function network element may still be the UPF network element or have another name. This is not limited in this application.
(7) The AUSF network element is mainly used for user authentication or the like. In a 5G communication system, an authentication server network element may be the AUSF network element. In a future communication system such as a 6G communication system, an authentication server network element may still be the AUSF network element or have another name. This is not limited in this application. Nausf is a service-oriented interface provided by the AUSF network element. The AUSF network element may communicate with another network function through Nausf.
(8) The NSSF network element is configured to select a network slice for a terminal device. In a 5G communication system, a network slice selection function network element may be the NSSF network element. In a future communication system such as a 6G communication system, a network slice selection function network element may still be the NSSF network element or have another name. This is not limited in this application.
(9) The NEF network element is configured to securely expose, to the outside, services, capabilities, and the like that are provided by 3GPP network functions. In a 5G communication system, a network exposure function network element may be the NEF network element. In a future communication system such as a 6G communication system, a network exposure function network element may still be the NEF network element or have another name. This is not limited in this application. Nnef is a service-oriented interface provided by the NEF network element. The NEF network element may communicate with another network function through Nnef.
(10) The NRF network element is configured to provide service registration, discovery, and authorization, and maintain available network function (network function, NF) instance information, to implement on-demand configuration of network functions and services and interconnection between NFs. In a 5G communication system, a network repository function network element may be the NRF network element. In a future communication system such as a 6G communication system, a network repository function network element may still be the NRF network element or have another name. This is not limited in this application. Nnrf is a service-oriented interface provided by the NRF network element. The NRF network element may communicate with another network function through Nnrf.
(11) The NSSAAF network element is mainly responsible for network slice-specific authentication and authorization, and may interact with an authentication, authorization, and accounting server (authentication, authorization, and accounting server, AAA-S) via an authentication, authorization, and accounting proxy (authentication, authorization, and accounting proxy, AAA-P). Nnssaaf is a service-oriented interface provided by the NSSAAF network element. The NSSAAF network element may communicate with another network function through Nnssaaf.
(12) The UDR network element is used by the UDM network element to store subscription data or read subscription data, and used by the PCF network element to store policy data or read policy data. The UDR network element is not shown in FIG. 1a.
(13) The EASDF network element processes a DNS message based on instructions of the SMF network element, for example, is responsible for creating a DNS context for a PDU session, and storing an IP address of a terminal device, a DNS message processing rule, or the like in the context. Optionally, the EASDF network element may also be configured to discover an EAS, for example, process a DNS request of the terminal device according to the DNS processing rule delivered by the SMF network element, and select an appropriate EAS for the terminal device. Neasdf is a service-oriented interface provided by the EASDF network element. The EASDF network element may communicate with another network function through Neasdf.

As shown in FIG. 1a, the terminal device may access the 5G communication system via an access network device (for example, a (R)AN device) or the like. The terminal device may communicate with the AMF network element through a next generation network (next generation, NG) 1 interface (N1 for short). The access network device communicates with the AMF network element through an N2 interface (N2 for short). The access network device communicates with the UPF network element through an N3 interface (N3 for short). The SMF network element communicates with the UPF network element through an N4 interface (N4 for short). The UPF network element accesses the data network through an N6 interface (N6 for short).

FIG. 1b is a diagram of an architecture of another possible communication system to which an embodiment of this application is applicable. As shown in FIG. 1b, the architecture of the communication system may include a terminal device (for example, UE), an access network (for example, a RAN), a core network, and a data network. Different from FIG. 1a, FIG. 1b shows a plurality of UPFs (for example, a UPF 1, a UPF 2, and a UPF 3) and a plurality of DNs (for example, a DN 1 and a DN 2). The access network includes an access network element. For descriptions of the terminal device and the access network element on the access network, refer to the content in the function description part in FIG. 1a. Details are not described herein again. A UDR network element is not shown in FIG. 1b.

The core network includes core network elements, the DN 1, and the DN 2. The DN 1 is, for example, a central (central) DN, and the DN 2 is, for example, an edge part of the DN. Optionally, the UPF 1 may implement a function of an uplink classifier (uplink classifier, UL CL) or a branching point (branching point, BP) (or may be referred to as a split point), to classify a part of data services to the DN 1, and classify a part of data services to the DN 2. For example, the UPF 1 may be a UL CL UPF network element. The UL CL/BP may be configured to classify service traffic to different routes according to a specific rule. The UE can access the DN 2 via the UPF 2 and access the DN 1 via the UPF 3. The UPF 2 and the UPF 3 are equivalent to implementing a function of a protocol data unit session anchor (protocol data unit session anchor, PSA). For example, the UPF 2 may be an L-PSA UPF network element, and the UPF 3 may be a C-PSA UPF network element.

The core network elements may include network elements such as an NEF network element, an NSSF network element, an NSSAAF network element, an NRF network element, a PCF network element, an AF network element, a UDM network element, a UDR network element, an AMF network element, an SMF network element, an AUSF network element, a UPF network element, and an EASDF network element. For functions and interfaces of the network elements included in FIG. 1b, refer to the content described in FIG. 1a. In addition, the SMF network element communicates with the UPF 1 network element through an N4 interface, the SMF network element communicates with the UPF 2 network element through an N4 interface, the SMF network element communicates with the UPF 3 network element through an N4 interface, the UPF 1 network element communicates with the UPF 3 network element through an N9 interface (N9 for short), the UPF 3 network element accesses the DN 1 through an N6 interface, and the UPF 2 network element accesses the DN 2 through an N6 interface.

It may be understood that, in a session, a UPF network element that is directly connected to a data network DN through N6 may be referred to as a PDU session anchor (PSA) (or may be referred to as a PSA UPF network element). A PSA (for example, the UPF 3) deployed at a center or a remote end is referred to as a central PSA (central PSA, C-PSA) (or may be referred to as a C-PSA UPF network element), and may access a remote/cloud EHE or application server (application server, AS). A PSA (for example, the UPF 2) deployed locally is referred to as an L-PSA (or may be referred to as an L-PSA UPF network element), and may access a local EHE or EAS.

It should be understood that the foregoing network element or function may be a network element in a hardware device, may be a software function running on dedicated hardware, or may be a virtualized function instantiated on a platform (for example, a cloud platform). Optionally, the network element or function may be implemented by one device, may be jointly implemented by a plurality of devices, or may be a functional module in one device. This is not specifically limited in embodiments of this application. In addition, for ease of description, in embodiments of this application, an "xxx network element" may also be briefly referred to as "xxx". For example, the AMF network element may be briefly referred to as an AMF, and the SMF network element may be briefly referred to as an SMF.

It may be understood that the access network device, the terminal device, the network element in the core network, and the like may be referred to as communication apparatuses. For example, the access network device may be understood as a communication apparatus having a base station function. The terminal device may be understood as a communication apparatus having a terminal function. The network element in the core network may be understood as an apparatus having a function of the core network element. For example, the AMF may be understood as a communication apparatus having an AMF function.

It should be noted that, the architecture of the communication system shown in FIG. 1a or FIG. 1b is intended to describe technical solutions in embodiments of this application more clearly, and do not constitute a limitation on the technical solutions provided in embodiments of this application. A person of ordinary skill in the art may learn that, with evolution of architectures of communication systems and emergence of new service scenarios, the technical solutions provided in embodiments of this application are also applicable to similar technical problems.

The following describes in detail specific implementations of the communication method in embodiments of this application with reference to the accompanying drawings.

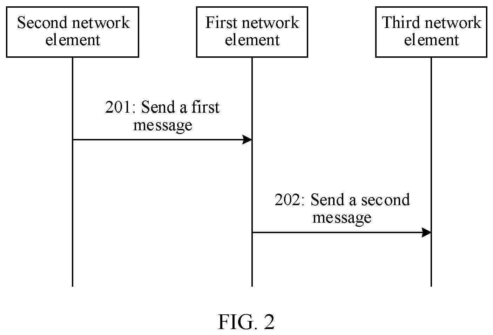

It may be understood that FIG. 2, FIG. 4a and FIG. 4b, or FIG. 5a and FIG. 5b below is illustrated by using an example in which a plurality of communication apparatuses (for example, a plurality of apparatuses among a first network element, a second network element, a third network element, a fourth network element, a fifth network element, a sixth network element, a seventh network element, an eighth network element, an access network device, and a terminal device) are used as execution bodies of interaction illustration. However, the execution bodies of the interaction illustration are not limited in this application. For example, the first network element may be an SMF network element, the second network element may be a local session management function (local smf, L-SMF) network element, the third network element may be a UL CL UPF network element (or a user plane function network element having a classifier function), the fourth network element may be a UDM network element (or a UDR network element), the fifth network element may be an EASDF network element, the sixth network element may be an L-PSA UPF network element, the seventh network element may be an AMF network element, the eighth network element may be a session management policy control function (session management policy control function, SM-PCF) network element, the terminal device may be UE, and the access network device may be a RAN device.

It should be understood that the method performed by the first network element in this application may alternatively be performed by a module (for example, a chip, a chip system, or a processor) used in the first network element, or may be implemented by a logical node, a logical module, or software that can implement all or a part of functions of the first network element. The method performed by the second network element in this application may alternatively be performed by a module (for example, a chip, a chip system, or a processor) used in the second network element, or may be implemented by a logical node, a logical module, or software that can implement all or a part of functions of the second network element. The method performed by the third network element in this application may alternatively be performed by a module (for example, a chip, a chip system, or a processor) used in the third network element, or may be implemented by a logical node, a logical module, or software that can implement all or a part of functions of the third network element. The method performed by the fourth network element in this application may alternatively be performed by a module (for example, a chip, a chip system, or a processor) used in the fourth network element, or may be implemented by a logical node, a logical module, or software that can implement all or a part of functions of the fourth network element. The method performed by the fifth network element in this application may alternatively be performed by a module (for example, a chip, a chip system, or a processor) used in the fifth network element, or may be implemented by a logical node, a logical module, or software that can implement all or a part of functions of the fifth network element. The method performed by the sixth network element in this application may alternatively be performed by a module (for example, a chip, a chip system, or a processor) used in the sixth network element, or may be implemented by a logical node, a logical module, or software that can implement all or a part of functions of the sixth network element. The method performed by the seventh network element in this application may alternatively be performed by a module (for example, a chip, a chip system, or a processor) used in the seventh network element, or may be implemented by a logical node, a logical module, or software that can implement all or a part of functions of the seventh network element. The method performed by the eighth network element in this application may alternatively be performed by a module (for example, a chip, a chip system, or a processor) used in the eighth network element, or may be implemented by a logical node, a logical module, or software that can implement all or a part of functions of the eighth network element. The method performed by the access network device in this application may alternatively be performed by a module (for example, a chip, a chip system, or a processor) used in the access network device, or may be implemented by a logical node, a logical module, or software that can implement all or a part of functions of the access network device. The method performed by the terminal device in this application may alternatively be performed by a module (for example, a chip, a chip system, or a processor) used in the terminal device, or may be implemented by a logical node, a logical module, or software that can implement all or a part of functions of the terminal device.

FIG. 2 shows an example of a schematic flowchart of a communication method according to an embodiment of this application. The method is applicable to the architecture of the communication system shown in FIG. 1a or FIG. 1b. As shown in FIG. 2, the method includes the following steps.

For example, the following describes an application scenario to which the communication method shown in FIG. 2 is applicable by using an example in which a first network element is an SMF network element, a second network element is an L-SMF network element, a third network element is a UL CL UPF network element, a fifth network element is an EASDF network element, a sixth network element is an L-PSA UPF network element, a seventh network element is an AMF network element, and an eighth network element is an SM-PCF network element.

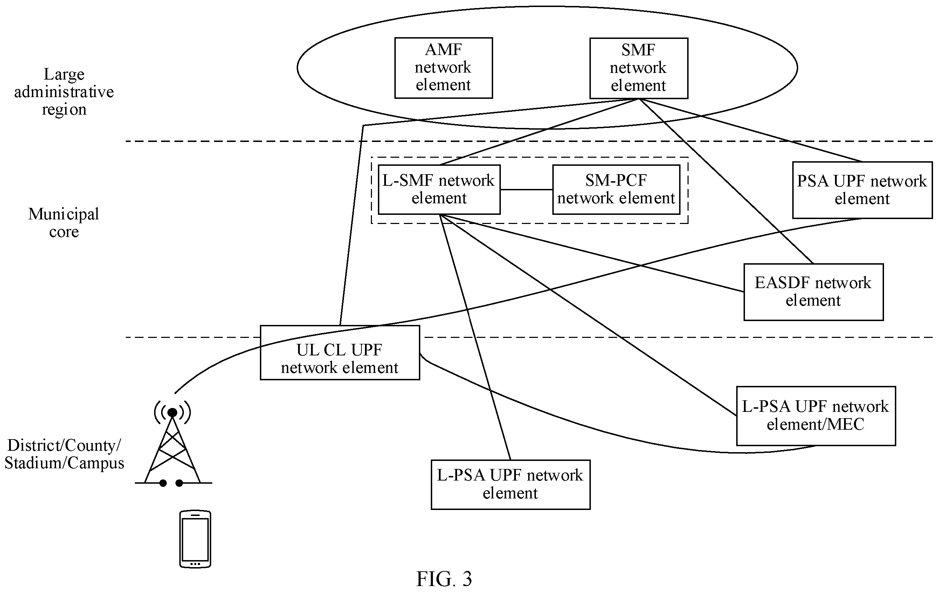

FIG. 3 is a diagram of a possible application scenario according to an embodiment of this application. As shown in FIG. 3, the application scenario includes a multi-layer network architecture, including a large administrative region, a municipal core, and a district/county/stadium/campus. In this way, management complexity of a centralized control plane can be shared in a hierarchical management manner. For example, the large administrative region includes an AMF network element and an SMF network element. The municipal core includes an L-SMF network element, an SM-PCF network element, an EASDF network element, and a PSA UPF network element. The district/county/stadium/campus includes a UL CL UPF network element and an L-PSA UPF network element/MEC.

The following briefly describes functions of some network elements included in the application scenario shown in FIG. 3.
a. For a related function of the AMF network element, refer to the function content descriptions of the AMF network element in the function description part in FIG. 1a. Details are not described herein again.
b. The SMF network element: (1) manages a UPF network element in an existing manner; (2) configures an addressing policy or a DNS processing policy for the EASDF network element; (3) selects a user plane function network element (for example, selects the UL CL UPF network element or the PSA UPF network element) for a user based on address information of an application server (for example, an EAS) returned by the EASDF network element, and creates a forwarding path (for example, a path or channel used to transmit local service data) and a classifier policy (or may be referred to as a forwarding policy, a forwarding rule, a distribution policy, or a distribution rule); (4) obtains local policy information (for example, a policy for subscribing to a local service by a terminal device) of the terminal device (for example, UE) from the L-SMF network element; (5) manages selection and insertion of the UL CL UPF network element; and (6) communicates with a UDM network element to obtain information such as an identifier of an L-SMF network element corresponding to the terminal device (for example, the UE).
c. The L-SMF network element: (1) manages a local user plane function network element, including selecting a local user plane function network element for a user session, creating a user plane forwarding path, configuring a classifier policy for the user plane function network element, and the like; (2) communicates with the UDM network element to obtain the information such as the identifier of the SMF network element corresponding to the terminal device (for example, the UE); (3) obtains a user policy from the SM-PCF network element, and generates a user plane policy; and (4) uploads a local policy (for example, the user plane policy) to the SMF network element.
d. The SM-PCF network element is configured to provide a general policy for a local user, for example, information about an accessible application or domain, or locally configured policy information that records user/application/network quality of service.
e. The EASDF network element: (1) adds address information to a DNS request of a user and requests an address from a local DNS server; and (2) sends address information of an application server to the SMF network element, to trigger the SMF network element to select a user plane function network element (for example, select the UL CL UPF network element) for the user, and create a forwarding path and a classifier policy.
f. The PSA UPF network element is connected (or interconnected) to a DN located in a large-scale network. For example, the PSA UPF network element is connected to a DN located in the municipal core.
g. The UL CL UPF network element has a classifier capability, may distribute, according to a classifier policy, uplink data received from the terminal device to a corresponding PSA UPF network element (or the L-PSA UPF network element), and may send, to the terminal device, data received from the PSA UPF network element (or the L-PSA UPF network element).
h. The L-PSA UPF network element is connected (or interconnected) to a DN (for example, a campus enterprise private network) located in a local data center (data center, DC) (for example, mobile edge computing or multi-access edge computing). For example, when there is a UPF network element in the local DN at a location of the terminal device, the SMF network element may insert the UPF as the L-PSA UPF network element into a PDU session path, so that the terminal device can access an application server in the local DN nearby.

It may be understood that the UL CL UPF network element and the L-PSA UPF network element may be disposed together, or the UL CL UPF network element and the L-PSA UPF network element may be disposed independently. This is not limited in embodiments of this application.

It should be understood that, a communication solution corresponding to the application scenario shown in FIG. 3 is to prevent the centralized control plane from being affected when a local application policy is used for user session addressing or classification. For example, large-scale update and modification of the local application policy do not affect the centralized control plane. In addition, different from an intermediate (intermediate) SMF (I-SMF) network element in a conventional technology that can directly manage the UL CL UPF network element, the L-SMF network element in this communication solution does not participate in management of the UL CL UPF network element. In the foregoing manner, management complexity of the centralized control plane can be reduced, and a routing path for the terminal device to access the edge application server can be optimized, to ensure service experience.

It may be understood that, for an implementation of deploying the local application policy (or the local user plane policy, for example, the classifier policy), refer to the following technical solutions provided in step 201 and step 202.

Step 201: The second network element sends a first message to the first network element. Correspondingly, the first network element receives the first message from the second network element.

Optionally, in this embodiment of this application, if the first network element is replaced with a functional module such as a chip system, the functional module may not perceive a specific device from which information is received; or if the second network element is replaced with a functional module such as a chip system, the functional module may not perceive a device to which information is sent.

The first message may include a policy for accessing a local service by the terminal device (or may be understood as a configuration policy for subscribing to the local service by the terminal device). The second network element (for example, the L-SMF network element) may be configured to manage the local user plane function network element (for example, the sixth network element). Optionally, the first message may further include at least one of the following: an FQDN, a data network access identifier (data network access identifier, DNAI), a fifth network element list (or a fifth network element identifier, a fifth network element index, or a fifth network element name) pre-cached by the second network element, or the like.

For example, the local service may include but is not limited to an edge service or an area service. The policy for accessing the local service by the terminal device may be a general policy for a local user, a local application policy, or the like. For example, the policy for accessing the local service by the terminal device may include a local addressing policy, a local classifier policy, or the like.

It should be understood that a case in which the second network element sends the first message is not limited in embodiments of this application.

For example, in an example, the second network element may send a second subscription message to a fourth network element. After receiving the second subscription message from the second network element, the fourth network element may send session information of the terminal device to the second network element. After receiving the session information of the terminal device from the fourth network element, the second network element may send the first message to the first network element based on information that is about the first network element configured to provide a service for the terminal device and that is included in the session information of the terminal device. The second subscription message may be used to subscribe to the session information of the terminal device, and the second subscription message may include identification information (such as an identity, an index, or a name) of the terminal device. The information about the first network element may be used to establish a communication connection between the second network element and the first network element. For example, the information about the first network element may include identification information (for example, an identity), index information, name information, or address information (for example, an IP address) of the first network element; and the session information of the terminal device may be carried (or carried or contained or included) in a response message of the second subscription message.

It may be understood that, after receiving the session information of the terminal device from the fourth network element, the second network element may establish the communication connection to the first network element based on the information that is about the first network element and that is included in the session information of the terminal device. After the second network element establishes the communication connection to the first network element, the first network element may send a third message to the second network element. After receiving the third message from the first network element, the second network element may send the first message to the first network element based on the third message. Optionally, after the second network element establishes the communication connection to the first network element, the second network element may alternatively actively send the first message to the first network element. The third message may be used to request the policy for accessing the local service by the terminal device. For example, the third message may carry the identification information (for example, the identity, the index, or the name) of the terminal device, a service identifier (or a service index or a service name), or the like. Optionally, the policy for accessing the local service by the terminal device may be obtained and requested by the second network element from the eighth network element, or may be actively pushed by the eighth network element to the second network element.

For example, the second subscription message may further include at least one of the following: a data network name (data network name, DNN), single network slice selection assistance information (single network slice selection assistance information, S-NSSAI), a DNAI, area information, or the like. The area information may include a specified (or indicated) area (or may be understood as an area range) used to trigger the fourth network element to send the session information of the terminal device to the second network element. The area information indicates that when the terminal device is located in a specified area, the fourth network element may send the session information of the terminal device to the second network element. Optionally, when the second subscription message includes information such as the DNN, the S-NSSAI, and the DNAI that correspond to the terminal device, the information such as the DNN, the S-NSSAI, and the DNAI that correspond to the terminal device may be used by the fourth network element to determine whether to send the session information of the terminal device to the second network element. For example, when the information, such as the DNN, the S-NSSAI, and the DNAI that correspond to the terminal device, that is included in the second subscription message is the same as information, such as a DNN, S-NSSAI, and a DNAI that correspond to the terminal device, that is pre-stored by the fourth network element, the fourth network element may send the session information of the terminal device to the second network element.

In another example, the second network element may send an eighth message to a fourth network element. The eighth message may be used to trigger establishment of a communication connection between the second network element and the first network element. After receiving the eighth message from the second network element, the fourth network element may send session information of the terminal device to the first network element. The session information of the terminal device may include information about the second network element that provides a service for the terminal device. After receiving the session information of the terminal device from the fourth network element, the first network element may establish the communication connection to the second network element based on the information that is about the second network element and that is included in the session information of the terminal device. After the first network element establishes the communication connection to the second network element, the first network element may send a third message to the second network element. After receiving the third message from the first network element, the second network element may send the first message to the first network element based on the third message. Optionally, after the first network element establishes the communication connection to the second network element, the second network element may alternatively actively send the first message to the first network element.

It may be understood that, that the fourth network element sends the session information of the terminal device to the first network element may be triggered by a fact that the first network element already subscribes to the session information of the terminal device from the fourth network element in advance. For example, the first network element may already send a first subscription message to the fourth network element in advance. The first subscription message may be used to subscribe to the session information of the terminal device (for example, subscribe to the information about the second network element corresponding to the terminal device). For example, the first subscription message may include identification information of the terminal device. When the session information of the terminal device is updated or the fourth network element stores new session information of the terminal device, the fourth network element may send the new session information of the terminal device to the first network element. Optionally, that the fourth network element sends the session information of the terminal device to the first network element may alternatively be triggered by an active push mode of the fourth network element.

For example, the eighth message may include the information about the second network element and the identification information (such as an identity, an index, or a name) of the terminal device. For example, the information about the second network element may include identification information (for example, an identity), index information, name information, or address information (for example, an IP address) of the second network element.

Optionally, the eighth message may further include at least one of the following: a DNN, S-NSSAI, a DNAI, area information, or the like. The area information may include a specified area used to trigger the fourth network element to send the session information of the terminal device to the first network element. The area information indicates that when the terminal device is located in a specified area, the fourth network element may send the session information of the terminal device to the first network element. Optionally, when the eighth message includes information such as the DNN, the S-NSSAI, and the DNAI that correspond to the terminal device, the information such as the DNN, the S-NSSAI, and the DNAI that correspond to the terminal device may be used by the fourth network element to determine whether to send the session information of the terminal device to the first network element. For example, when the information, such as the DNN, the S-NSSAI, and the DNAI that correspond to the terminal device, included in the eighth message is the same as information, such as a DNN, S-NSSAI, and a DNAI that correspond to the terminal device, that is pre-stored by the fourth network element, the fourth network element may send the session information of the terminal device to the first network element.

Step 202: The first network element sends a second message to the third network element. Correspondingly, the third network element receives the second message from the first network element.

The second message may be used to configure a classifier policy for accessing the local service by the terminal device, or the second message may indicate the third network element to configure the classifier policy for accessing the local service by the terminal device. The classifier policy for accessing the local service by the terminal device is determined by the first network element according to the policy (for example, an addressing policy corresponding to the local service) for accessing the local service by the terminal device.

For example, the following describes, in the following several possible implementations, a process of determining the third network element (or may be understood as a selection process or an insertion process).

Manner 1: When the policy for accessing the local service by the terminal device does not include the classifier policy for accessing the local service by the terminal device, after receiving a fifth message from the fifth network element (for example, the EASDF network element), the first network element may determine, based on the fifth message, a user plane function network element as the third network element in an existing manner of determining the third network element. It may be understood that the fifth message may be used to trigger the first network element to determine the third network element. Optionally, the fifth message may include address information (for example, an IP address) of a first application server (for example, an EAS), or may include the addressing policy corresponding to the local service or the like. The address information of the first application server may be obtained through domain name query initiated by the terminal device.

The following describes, by using the following several possible examples, an implementation process in which the first network element selects the fifth network element.

Example 1: In a process in which the terminal device completes a session creation request, the first network element selects a fifth network element for a session (for example, a current user session or a current PDU session) of the terminal device in an existing manner of selecting the fifth network element. For example, the fifth network element may be configured to forward a domain name query request (for example, a DNS query request) from the terminal device to the DNS server, and forward a response message from the DNS server to the terminal device. The DNS server may be configured to select, for a user corresponding to the terminal device, an application server whose distance from a location of the terminal device is less than or equal to a first distance threshold. The application server may be configured to provide a corresponding application service for the terminal device. In this way, when the user needs to access an application, a network side may help the user find a nearby application server that can support the application, and create a shortest path to access the application, to reduce an access delay.

Example 2: When the policy for accessing the local service by the terminal device does not include the addressing policy corresponding to the local service, and no fifth network element is selected for a session of the terminal device, the first network element may select a fifth network element for the session of the terminal device in an existing manner of selecting the fifth network element.

For example, when using the existing manner of selecting the fifth network element, the first network element may select a fifth network element as a fifth network element corresponding to the session of the terminal device by using at least one of the following information: a DNN, S-NSSAI, a DNAI, the information about the second network element (for example, area information (or may be understood as a service range or a service area)), a fifth network element list (or a fifth network element identifier, a fifth network element index, or a fifth network element name) provided by the second network element, or a location of the terminal device. Optionally, the fifth network element list may include an identifier (or an index or a name) of at least one fifth network element, and the like. It may be understood that the fifth network element list (or the fifth network element identifier, the fifth network element index, or the fifth network element name) may be an available fifth network element list (or a fifth network element identifier, a fifth network element index, or a fifth network element name) locally cached (or pre-cached) by the second network element.

Optionally, when the information about the second network element includes the service range of the second network element, the first network element may select a fifth network element whose service range includes the service range of the second network element as the fifth network element corresponding to the session of the terminal device; or when the information about the second network element includes location information of the second network element, the first network element may select a fifth network element whose distance from a location of the second network element is less than or equal to a second distance threshold as the fifth network element corresponding to the session of the terminal device.

For example, the first network element is an SMF network element, the second network element is an L-SMF network element, the fifth network element is an EASDF network element, at least one of the foregoing information includes information (for example, a service range or location information) about the L-SMF network element and an EASDF network element list provided by the L-SMF network element, the fifth network element list includes three EASDF network elements (for example, an EASDF network element 1, an EASDF network element 2, and an EASDF network element 3), and the session of the terminal device is a current PDU session of the UE. Each EASDF network element has its own service range. For example, a service range of the EASDF network element 1 is a1, a service range of the EASDF network element 2 is a2, and a service range of the EASDF network element 3 is a3. Each EASDF network element has its own location. For example, a location of the EASDF network element 1 is s1, a location of the EASDF network element 2 is s2, and a location of the EASDF network element 3 is s3. In an example, when the information about the L-SMF network element includes the service range (for example, a service range a0) of the L-SMF network element, the SMF network element may select, from the three EASDF network elements, an EASDF network element whose service range includes the service range a0 as an EASDF network element corresponding to the current PDU session of the UE, for example, the EASDF network element 2. The service range a0 of the L-SMF network element is included in the service range a2 of the EASDF network element 2. In another example, when the information about the L-SMF network element includes the location information (for example, a location a) of the L-SMF network element, the SMF network element may select, from the three EASDF network elements, an EASDF network element whose distance from the location a of the L-SMF network element is less than or equal to the second distance threshold (for example, r) as an EASDF network element corresponding to the current PDU session of the UE, for example, the EASDF network element 1. A value of a distance between the location s1 of the EASDF network element 1 and the location a of the L-SMF network element is less than or equal to r.

It may be understood that when the policy for accessing the local service by the terminal device does not include the addressing policy corresponding to the local service, the first network element may send a fourth message to the fifth network element after selecting a fifth network element as the fifth network element corresponding to the session of the terminal device. For example, the fourth message may include the addressing policy corresponding to the local service. The fourth message may be used to configure the addressing policy corresponding to the local service, or the fourth message may indicate the fifth network element to configure the addressing policy corresponding to the local service. For example, the addressing policy corresponding to the local service may be created (or may be referred to as generated) by the first network element for the fifth network element according to the policy for accessing the local service by the terminal device. Then, the first network element may send address information (for example, an IP address or a physical address) of the fifth network element to the terminal device. The address information of the fifth network element may be used by the terminal device to subsequently perform domain name query.

Optionally, in this embodiment of this application, the fifth network element may alternatively be selected by using the second network element. For example, when the second network element locally pre-caches the fifth network element list, the second network element may select, from the fifth network element list, a fifth network element as the fifth network element corresponding to the session of the terminal device in an existing manner of selecting the fifth network element. For example, when using the existing manner of selecting the fifth network element, the second network element may select the fifth network element by using at least one of the following information: the DNN, the S-NSSAI, the DNAI, the information about the second network element (for example, the area information (or may be understood as the service range or the service area)), the fifth network element list, the location of the terminal device, or the like.

After selecting the fifth network element corresponding to the session of the terminal device, the second network element may send a sixth message to the fifth network element. For example, the sixth message may include the addressing policy corresponding to the local service. The sixth message may be used to configure the addressing policy corresponding to the local service, or the sixth message may indicate the fifth network element to configure the addressing policy corresponding to the local service, and the addressing policy is included in the policy for accessing the local service by the terminal device. After selecting the fifth network element corresponding to the session of the terminal device, the second network element may also send a seventh message to the first network element. For example, the seventh message may include identification information and/or the address information of the fifth network element. The identification information and/or the address information of the fifth network element may be used to establish a communication connection between the first network element and the fifth network element.

It may be understood that when a user needs to access an application, the user may send a DNS request to the fifth network element based on the address information of the fifth network element via the terminal device. The DNS request is used to obtain address information of an application server that supports the application. After receiving the DNS request, the fifth network element may forward the DNS request to the DNS server according to the configured addressing policy. After receiving the DNS request, the DNS server may select, for the user based on extended mechanisms for DNS (extended mechanisms for DNS) client subnet (client subnet) option information that is carried in the DNS request and indicates the location of the terminal device, an application server whose distance from the location of the terminal device is less than or equal to the first distance threshold, and may send a DNS response message to the fifth network element. The DNS response message may include the address information of the application server. After receiving the DNS response message, the fifth network element may send the DNS response message to the terminal device. Optionally, after receiving the DNS response message, the fifth network element may send the sixth message to the first network element based on the DNS response message.

Manner 2: When the policy for accessing the local service by the terminal device includes the classifier policy for accessing the local service by the terminal device, the first network element may determine a user plane function network element as the third network element according to the classifier policy for accessing the local service by the terminal device in an existing manner of determining the third network element.

For example, when using the existing manner of determining the third network element, the first network element may determine a user plane function network element as the third network element by using at least one of the following information: a location of the terminal device, a list of data networks respectively supported by a plurality of user plane function network elements, service ranges respectively corresponding to the plurality of user plane function network elements, load respectively corresponding to the plurality of user plane function network elements, session and service continuity (session and service continuity, SSC) modes respectively supported by the plurality of user plane function network elements, or the like. It may be understood that the location of the terminal device may be user location information (user location information, ULI).

Manner 3: The third network element may be preconfigured, or may be predefined in a protocol.

The following describes, in the following several possible implementations, an implementation process in which the first network element determines the classifier policy for accessing the local service by the terminal device.

Implementation 1: When the policy for accessing the local service by the terminal device includes the classifier policy for accessing the local service by the terminal device, the first network element may directly include, in the second message, the classifier policy for accessing the local service by the terminal device, or may directly include, in the second message, the policy for accessing the local service by the terminal device.

Implementation 2: When the policy for accessing the local service by the terminal device does not include the classifier policy for accessing the local service by the terminal device, the first network element may create, according to the policy for accessing the local service by the terminal device (for example, the addressing policy corresponding to the local service), the classifier policy for accessing the local service by the terminal device. Then, the first network element may include, in the second message, the classifier policy for accessing the local service by the terminal device.

Implementation 3: When the policy for accessing the local service by the terminal device does not include the classifier policy for accessing the local service by the terminal device, after receiving a fifth message from the fifth network element (for example, the EASDF network element), the first network element may determine the third network element based on the fifth message. Then, the first network element may create, according to the policy (for example, the addressing policy corresponding to the local service) for accessing the local service by the terminal device, the classifier policy for accessing the local service by the terminal device.

Optionally, in this embodiment of this application, after the first network element determines the third network element, the first network element may send fourth information to the third network element. For example, the fourth information may be an N4 session modification request (or may be referred to as a session modification request), or may be an N4 session creation request (or may be referred to as a session creation request), and is used to request the third network element to allocate a corresponding uplink tunnel identifier and/or downlink tunnel identifier. The fourth information may include a downlink tunnel identifier of an access network device. Optionally, the fourth information may further include at least one of the following: requesting the third network element to allocate the uplink tunnel identifier and/or the downlink tunnel identifier, or requesting the third network element to update the classifier policy (for example, sending an uplink packet with a specified feature to a local network), or the like. After receiving the fourth information from the first network element, the third network element may send fifth information to the first network element. For example, the fifth information may include the uplink tunnel identifier and/or the downlink tunnel identifier of the third network element. In an example, if the uplink tunnel identifier of the third network element is updated, the fifth information may include the downlink tunnel identifier and/or an updated uplink tunnel identifier of the third network element. In another example, if the downlink tunnel identifier of the third network element is updated, the fifth information may include the uplink tunnel identifier and/or an updated downlink tunnel identifier of the third network element. In still another example, if both the uplink tunnel identifier and the downlink tunnel identifier of the third network element are updated, the fifth information may include an updated downlink tunnel identifier and/or an updated uplink tunnel identifier of the third network element.

It may be understood that after the first network element determines the third network element, the first network element may also send first information to the second network element. For example, the first information may be a session modification request, or may be a session creation request, includes additional N4 information, and is used to request an uplink tunnel identifier of the sixth network element. The first information may be used to request to allocate the uplink tunnel identifier of the sixth network element. The first information may include the downlink tunnel identifier of the third network element. The sixth network element is a local user plane function network element. Optionally, the first information may further include at least one of the following: a DNN, S-NSSAI, the identification information of the terminal device, or the like. It should be understood that the first information may also indicate the second network element to send the downlink tunnel identifier of the third network element to the sixth network element, to facilitate establishment of a user plane tunnel (or may be understood as a communication tunnel) between the third network element and the sixth network element. After receiving the first information from the first network element, the second network element may send sixth information to the sixth network element. For example, the sixth information may be an N4 session modification request, or may be an N4 session creation request. The sixth information may be used to request to allocate the uplink tunnel identifier of the sixth network element, and the sixth information may include the downlink tunnel identifier of the third network element. After receiving the sixth information from the second network element, the sixth network element may send seventh information to the second network element. For example, the seventh information may be a session modification response, or may be an N4 session creation response. The seventh information may include the uplink tunnel identifier of the sixth network element. After receiving the seventh information of the sixth network element, the second network element may send second information to the first network element. The second information may include the uplink tunnel identifier of the sixth network element. After receiving the second information from the second network element, the first network element may send third information to the third network element. The third information may include the uplink tunnel identifier of the sixth network element. In this way, a first user plane tunnel corresponding to the local service may be established between the third network element and the sixth network element based on the uplink tunnel identifier of the sixth network element and the downlink tunnel identifier of the third network element. Subsequently, local service data transmission may be performed between the third network element and the sixth network element through the first user plane tunnel.

Optionally, if the fifth information includes the updated uplink tunnel identifier of the third network element, the first network element may send the updated uplink tunnel identifier of the third network element to the access network device. In this way, a second user plane tunnel corresponding to the local service may be established between the third network element and the access network device based on the downlink tunnel identifier of the access network device and the updated uplink tunnel identifier of the third network element. Subsequently, local service data transmission may be performed between the access network device and the third network element through the second user plane tunnel. If the fifth information includes the uplink tunnel identifier of the third network element, the first network element may send the uplink tunnel identifier of the third network element to the access network device. In this way, a user plane tunnel corresponding to the local service may be established between the third network element and the access network device based on the downlink tunnel identifier of the access network device and the uplink tunnel identifier of the third network element. Subsequently, local service data transmission may be performed between the access network device and the third network element through the user plane tunnel.

If the fifth information includes the updated downlink tunnel identifier of the third network element (or the downlink tunnel identifier of the third network element), the first network element may send the updated downlink tunnel identifier of the third network element (or the downlink tunnel identifier of the third network element) to the second network element. After receiving the updated downlink tunnel identifier of the third network element, the second network element may send the updated downlink tunnel identifier of the third network element (or the downlink tunnel identifier of the third network element) to the sixth network element. In an example, if the uplink tunnel identifier of the sixth network element is not updated, the sixth network element sends, to the second network element, a response message indicating that the updated downlink tunnel identifier has been received. After receiving the response message, the second network element may send the response message to the first network element. In this way, a user plane tunnel corresponding to the local service may be established between the third network element and the sixth network element based on the uplink tunnel identifier of the sixth network element and the updated downlink tunnel identifier of the third network element (or the downlink tunnel identifier of the third network element). Subsequently, local service data transmission may be performed between the third network element and the sixth network element through the user plane tunnel.

In another example, if the uplink tunnel identifier of the sixth network element is updated, a response message sent by the sixth network element to the second network element carries an updated uplink tunnel identifier of the sixth network element. After receiving the response message, the second network element may send the response message to the first network element. After receiving the response message, the first network element may obtain the updated uplink tunnel identifier of the sixth network element from the response message, and send the updated uplink tunnel identifier of the sixth network element to the third network element. In this way, a user plane tunnel corresponding to the local service may be established between the third network element and the sixth network element based on the updated uplink tunnel identifier of the sixth network element and the updated downlink tunnel identifier of the third network element (or the downlink tunnel identifier of the third network element). Subsequently, local service data transmission may be performed between the third network element and the sixth network element through the user plane tunnel.

It can be learned from step 201 and step 202 that, the second network element performs intra-domain user plane management (for example, management of the sixth network element) and user policy management (or may be referred to as local user plane policy management, for example, management of a policy for subscribing to the local service by the terminal device). In this way, direct management of a centralized control plane can be avoided, so that when user services (which may be understood as local services) are deployed/provisioned/changed in the domain, the centralized control plane may not perceive deployment/provision/change of local service policies or local service logic, to effectively decrease (or reduce) management complexity of the centralized control plane.

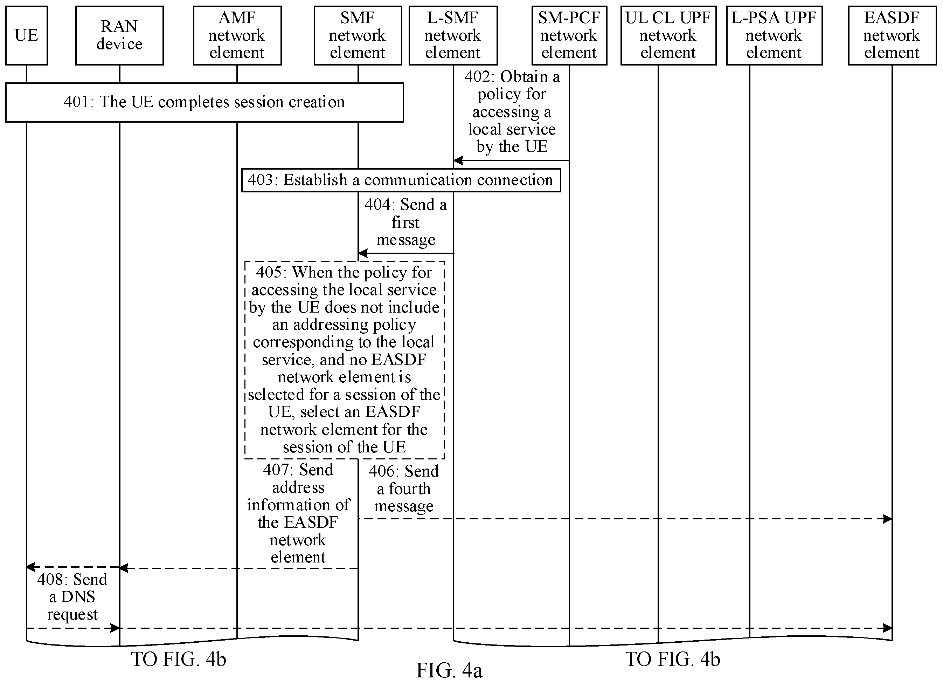

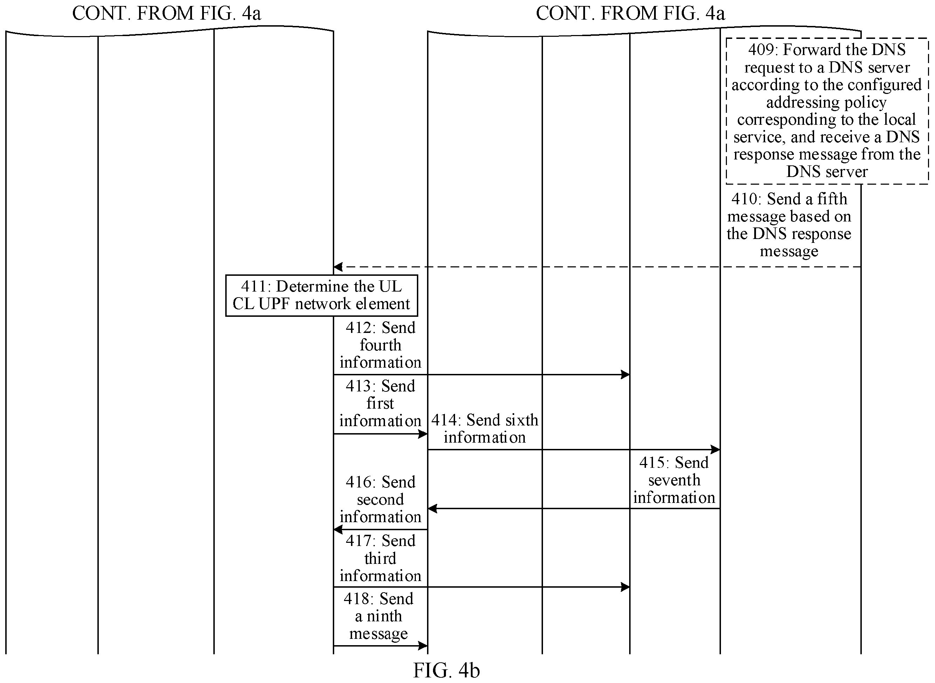

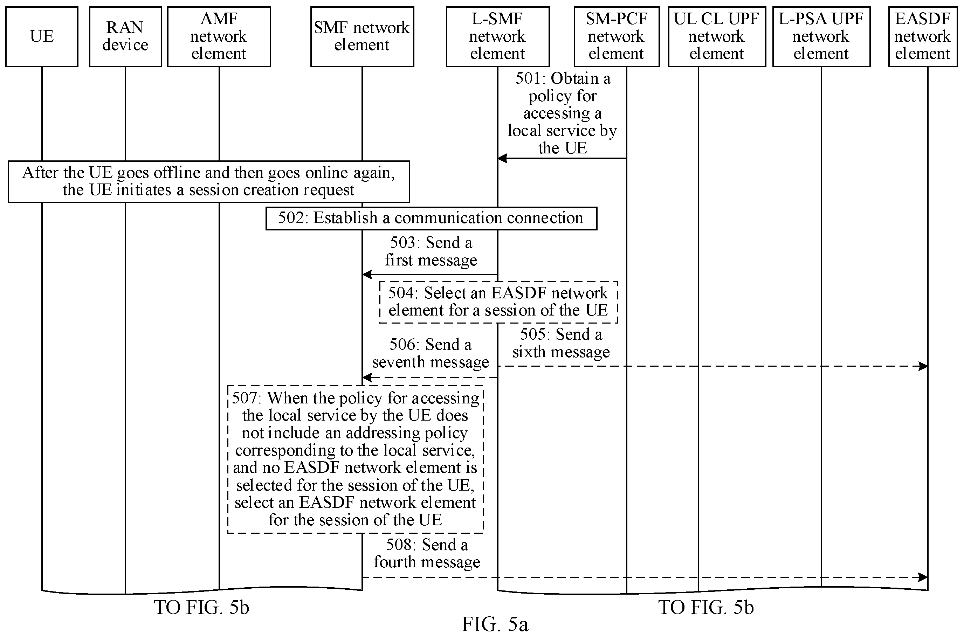

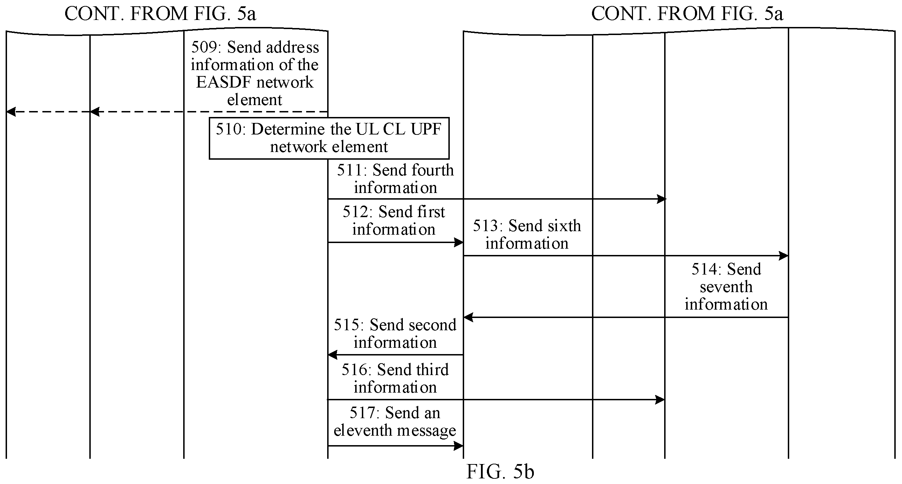

According to the technical solutions of the foregoing communication method shown in FIG. 2, the following describes, in detail by using specific examples shown in FIG. 4a and FIG. 4b and FIG. 5a and FIG. 5b, the foregoing communication method shown in FIG. 2. In the specific examples shown in FIG. 4a and FIG. 4b and FIG. 5a and FIG. 5b, a first network element is an SMF network element, a second network element is an L-SMF network element, a third network element is a UL CL UPF network element, a fourth network element is a UDM network element, a fifth network element is an EASDF network element, a sixth network element is an L-PSA UPF network element, a seventh network element is an AMF network element, an eighth network element is an SM-PCF network element, a terminal device is UE, and an access network device is a RAN device. It may be understood that a scenario to which a communication solution shown in FIG. 4a and FIG. 4b is applicable is: When the UE is continuously online and the PSA UPF remains unchanged, the UE performs local service subscription and a session modification procedure required for subsequently performing a local service of a district/county/campus/stadium. A scenario to which a communication solution shown in FIG. 5a and FIG. 5b is applicable is: After the UE subscribes to a local service, the L-SMF network element obtains a local policy, and completes subscribing to related session information of the UE from the UDM network element. Then, when the UE re-creates a session, a procedure of creating a local service session in the UE session is triggered. In other words, the scenario to which the communication solution shown in FIG. 5a and FIG. 5b is applicable may be understood as a scenario in which the UE first subscribes to the local service, goes offline, and then goes online again to access the local service.

FIG. 4a and FIG. 4b are a schematic flowchart of another communication method according to an embodiment of this application. As shown in FIG. 4a and FIG. 4b, a specific procedure of the method may include the following steps.

Step 401: UE completes session creation.

Optionally, the foregoing step 401 may reuse an existing session creation procedure. Details are not described herein again.

In this embodiment of this application, a UE large administrative region session is created via an SMF network element and a PSA UPF network element. In this process, related information of the SMF network element (for example, identification information of the SMF network element) that provides a corresponding service for the UE and related information of the UE (for example, identification information of the UE) may be registered with a UDM network element. Optionally, in step 401, the SMF network element may select an EASDF network element as an EASDF network element corresponding to the session of the UE in an existing manner of selecting the EASDF network element.

Step 402: An L-SMF network element obtains, from an SM-PCF network element, a policy for accessing a local service by the UE.

In this embodiment of this application, after the UE subscribes to the local service (for example, may perform a behavior such as scanning), the L-SMF network element may request, from the SM-PCF network element, to obtain the policy for accessing the local service by the UE, or the SM-PCF network element may alternatively actively push, to the L-SMF network element, the policy for accessing the local service by the UE. Optionally, for a procedure of establishing the communication connection between the L-SMF network element and the SM-PCF network element, refer to a procedure of a communication connection between the SMF network element and the PCF network element in the conventional technology. Details are not described herein again.

Step 403: The SMF network element establishes a communication connection to the L-SMF network element.

For example, the following describes, by using the following several possible examples, an implementation process of establishing the communication connection between the SMF network element and the L-SMF network element.

Example 1: The L-SMF network element sends a subscription message to the UDM network element. The subscription message is used to subscribe to related session information of the UE. The subscription message may include the identification information and/or the session information of the UE. Optionally, the subscription message may further include at least one of the following: area information, S-NSSAI, a DNAI, a DNN, or the like. The area information indicates that when the UE is in a specified area included in the area information, the UDM network element is triggered to send the related session information of the UE to the L-SMF network element (for example, the identification information of the SMF network element that provides a service for the session of the UE). The information such as the S-NSSAI, the DNAI, or the DNN may be used by the UDM network element to determine whether to trigger sending of the related session information of the UE to the L-SMF network element. For example, when the subscription message includes the information such as the S-NSSAI, the DNAI, or the DNN, if the information such as the S-NSSAI, the DNAI, or the DNN is the same as locally cached information such as the S-NSSAI, the DNAI, or the DNN, the UDM network element may send the related session information of the UE to the L-SMF network element.

Then, the UDM network element may send a response message of the subscription message to the L-SMF network element. The response message of the subscription message may include the identification information of the SMF network element that provides the service for the session of the UE. In this way, after receiving the response message of the subscription message, the L-SMF network element may obtain the identification information of the SMF network element from the response message of the subscription message, and may establish the communication connection to the SMF network element based on the identification information of the SMF network element.

Example 2: The L-SMF network element sends an eighth message to the UDM network element. For example, the eighth message may include the information about the L-SMF network element and the identification information of the corresponding UE. Optionally, the eighth message may further include at least one of the following: the DNN, the S-NSSAI, the DNAI, the area information, or the like. After receiving the eighth message, the UDM network element may determine, based on the information about the L-SMF network element and the identification information of the UE that are included in the eighth message, the identification information of the L-SMF network element that corresponds to current serving UE and that is responsible for the local service, and may send the related session information of the UE to the SMF network element. The related session information of the UE may include identification information of the L-SMF network element. After receiving the related session information of the UE, the SMF network element may obtain identification information of the L-SMF network element from the related session information of the UE, and may establish the communication connection to the L-SMF network element based on the identification information of the L-SMF network element. It may be understood that before the UDM network element sends the related session information of the UE to the SMF network element, the SMF network element subscribes to the related session information of the UE from the UDM network element. For example, when the eighth message includes information such as the S-NSSAI, the DNAI, or the DNN, the UDM network element may determine, based on the information such as the S-NSSAI, the DNAI, or the DNN included in the eighth message, whether to send the related session information of the UE to the SMF network element. If the information such as the S-NSSAI, the DNAI, or the DNN is the same as the locally cached information such as the S-NSSAI, the DNAI, or the DNN, the UDM network element may send the related session information of the UE to the SMF network element.

Step 404: The L-SMF network element sends a first message to the SMF network element. Correspondingly, the SMF network element receives the first message from the L-SMF network element.

Optionally, for a related implementation process of step 404, refer to the related implementation process of step 201. Details are not described herein again.

Optionally, after step 404 is performed, the SMF network element may further perform step 405 to step 407. By performing step 405 to step 407, when the policy for accessing the local service by the UE does not include an addressing policy corresponding to the local service, and no EASDF network element is selected for the user session of the UE, the SMF network element may select, based on related user session information (such as one or more of the DNN, the S-NSSAI, the DNAI, information about a second network element, or a fifth network element list) provided by the L-SMF network element, an EASDF network element for the user session corresponding to the UE.

Step 405: When the policy for accessing the local service by the UE does not include the addressing policy corresponding to the local service, and no EASDF network element is selected for the session of the UE, the SMF network element selects an EASDF network element for the session of the UE.

Optionally, for a related implementation process of step 405, refer to the related implementation process described in Example 2 in step 202. Details are not described herein again.

Step 406: The SMF network element sends a fourth message to the EASDF network element. Correspondingly, the EASDF network element receives the fourth message from the SMF network element.

Optionally, for a related implementation process of step 406, refer to the related implementation process of sending the fourth message by the first network element to the fifth network element in step 202. Details are not described herein again.

Step 407: The SMF network element sends address information of the EASDF network element to the UE. Correspondingly, the UE receives the address information of the EASDF network element from the SMF network element.

The address information (for example, an IP address) of the EASDF network element may be used by the UE to subsequently perform domain name query, for example, may be used by the UE to initiate a DNS request.

Step 408: The UE sends the DNS request to the EASDF network element. Correspondingly, the EASDF network element receives the DNS request from the UE.

The DNS request is used to obtain address information of an application server that supports a specific application that a user corresponding to the UE needs to access.

Step 409: The EASDF network element forwards the DNS request to a DNS server according to the configured addressing policy corresponding to the local service, and receives a DNS response message from the DNS server.

The DNS response message may include the address information of the application server that is selected by the DNS server for the user and that is used to support the application that needs to be accessed.

Step 410: The EASDF network element sends a fifth message to the SMF network element based on the DNS response message. Correspondingly, the SMF network element receives the fifth message from the EASDF network element.

Optionally, for related descriptions of the fifth message in step 410, refer to related descriptions of the fifth message in step 202. Details are not described herein again.

It should be understood that step 405 to step 410 are optional steps.

Step 411: The SMF network element determines a UL CL UPF network element.

Optionally, for a related implementation process of step 411, refer to the process of determining the third network element in step 202. Details are not described herein again.

Step 412: The SMF network element sends fourth information to the UL CL UPF network element. Correspondingly, the UL CL UPF network element receives the fourth information from the SMF network element.

For example, the fourth information may be an N4 session modification request.

Optionally, for a related implementation process of step 412, refer to the related implementation process of sending the fourth information by the first network element to the third network element in step 202. Details are not described herein again.

Step 413: The SMF network element sends first information to the L-SMF network element. Correspondingly, the L-SMF network element receives the first information from the SMF network element.

For example, the first information may be a session modification request.

Optionally, for a related implementation process of step 413, refer to the related implementation process of sending the first information by the first network element to the second network element in step 202. Details are not described herein again.

Step 414: The L-SMF network element sends sixth information to an L-PSA UPF network element. Correspondingly, the L-PSA UPF network element receives the sixth information from the L-SMF network element.

For example, the sixth information may be the N4 session modification request.

Optionally, for a related implementation process of step 414, refer to the related implementation process of sending the sixth information by the second network element to the sixth network element in step 202. Details are not described herein again.

Step 415: The L-PSA UPF network element sends seventh information to the L-SMF network element. Correspondingly, the L-SMF network element receives the seventh information from the L-PSA UPF network element.

For example, the seventh information is a session modification response.

Optionally, for a related implementation process of step 415, refer to the related implementation process of sending the seventh information by the sixth network element to the second network element in step 202. Details are not described herein again.

Step 416: The L-SMF network element sends second information to the SMF network element. Correspondingly, the SMF network element receives the second information from the L-SMF network element.

Optionally, for a related implementation process of step 416, refer to the related implementation process of sending the second information by the second network element to the first network element in step 202. Details are not described herein again.

Step 417: The SMF network element sends third information to the UL CL UPF network element. Correspondingly, the UL CL UPF network element receives the third information from the SMF network element.

Optionally, for a related implementation process of step 417, refer to the related implementation process of sending the third information by the first network element to the third network element in step 202. Details are not described herein again.

Step 418: The SMF network element sends a ninth message to the L-SMF network element. Correspondingly, the L-SMF network element receives the ninth message from the SMF network element.

In this embodiment of this application, when the SMF network element sends the ninth message to the L-SMF network element, a user plane tunnel for transmission of local service data is established. For example, the ninth message may be a session modification complete response. The ninth message may indicate that session modification is completed.

Optionally, when step 410 is performed, the SMF network element also needs to send the session modification complete response to the EASDF network element.

Optionally, when step 408 is performed, the EASDF network element needs to send the response message of the DNS request to the UE. The response message of the DNS request indicates that the user plane tunnel for transmission of the local service data is established, and the user may start to perform the local service.

It can be learned from step 401 to step 418 that the SMF network element may select, for the UE according to a classifier policy or the addressing policy that corresponds to the local service and that is provided by the L-SMF network element, a user plane network element managed by the SMF network element as the UL CL UPF network element, and may configure the classifier policy for the UL CL UPF network element. In addition, when the policy for accessing the local service by the UE does not include the addressing policy corresponding to the local service, and no EASDF network element is selected for the user session of the UE, the SMF network element may select an EASDF network element for the user session corresponding to the UE, and may configure the addressing policy for the EASDF network element. Optionally, the SMF network element may also configure a DNS processing policy for the EASDF network element. In this way, when the L-SMF network element manages the local user plane function network element and the local user plane policy, according to the method, a centralized SMF network element may not perceive deployment of the user plane network element, an application, and the like in the domain (or may be understood as local), and may not perceive a policy generation manner of a service of a user in the domain. In this way, management complexity of the centralized SMF network element and another control network element can be reduced.

It may be understood that, in comparison with that in the conventional technology, in the communication solution provided in step 401 to step 418, the L-SMF network element performs intra-domain user plane management and user policy management. In this way, direct management of a centralized control plane can be avoided, so that when user services (which may be understood as local services) are deployed/provisioned/changed in the domain, the centralized control plane may not perceive deployment/provision/change of local service policies or local service logic, to effectively reduce management complexity of the centralized control plane.

FIG. 5a and FIG. 5b are a schematic flowchart of still another communication method according to an embodiment of this application. As shown in FIG. 5a and FIG. 5b, a specific procedure of the method may include the following steps.

Step 501: An L-SMF network element obtains, from an SM-PCF network element, a policy for accessing a local service by UE.

Optionally, for a related implementation process of step 501, refer to the related implementation process of step 402. Details are not described herein again.

Step 502: An SMF network element establishes a communication connection to the L-SMF network element.

For example, the following describes, by using the following several possible examples, an implementation process of establishing the communication connection between the SMF network element and the L-SMF network element.

Example 1: The L-SMF network element sends a subscription message to a UDM network element. The subscription message is used to subscribe to related session information of the UE. The subscription message may include identification information and/or the session information of the UE. Optionally, the subscription message may further include at least one of the following: area information, S-NSSAI, a DNAI, a DNN, or the like. The area information indicates that when the UE is in a specified area included in the area information, the UDM network element is triggered to send the related session information of the UE to the L-SMF network element (for example, identification information of the SMF network element that provides a service for the session of the UE). The information such as the S-NSSAI, the DNAI, or the DNN may be used by the UDM network element to determine whether to trigger sending of the related session information of the UE to the L-SMF network element. For example, when the subscription message includes the information such as the S-NSSAI, the DNAI, or the DNN, if the information such as the S-NSSAI, the DNAI, or the DNN is the same as locally cached information such as the S-NSSAI, the DNAI, or the DNN, the UDM network element is triggered to send the related session information of the UE to the L-SMF network element. It should be understood that a process in which the L-SMF network element sends the subscription message to the UDM network element is performed when the UE is online.

When the UDM network element initiates a session creation request after the UE goes offline (for example, the UE is powered off) and goes online again, the UDM network element may send a tenth message to the L-SMF network element. The tenth message may include the identification information of the SMF network element that provides a service for the session of the UE, to facilitate establishment of the communication connection between the L-SMF network element and the SMF network element. Optionally, after the UE goes offline and goes online again, the UE sends the session creation request to a RAN device, and the RAN device sends the session creation request to an AMF network element. After receiving the session creation request, the AMF network element selects a corresponding SMF network element for the user session of the UE. Then, the AMF network element sends the session creation request to the SMF network element. For example, the session creation request may include at least one of the following: a tunnel identifier (for example, an uplink tunnel identifier or a downlink tunnel identifier) of the RAN device, the DNN, the S-NSSAI, or the like. It should be understood that, in a session creation process, information (for example, identification information) about the SMF network element corresponding to the UE and information (for example, identification information) about the AMF network element may be registered with the UDM network element.

Example 2: The L-SMF network element sends an eighth message to a UDM network element. For example, the eighth message may include information about the L-SMF network element and identification information of the UE. Optionally, the eighth message may further include at least one of the following: a DNN, S-NSSAI, a DNAI, area information, or the like. It should be understood that a process in which the L-SMF network element sends the eighth message to the UDM network element is performed when the UE is online. That the L-SMF network element sends the eighth message to the UDM network element may be understood as meaning that the L-SMF network element actively registers related information (for example, corresponding information included in the eighth message) of the L-SMF network element with the UDM network element.

When initiating a session creation request after the UE goes offline (for example, the UE is powered off) and goes online again, the UDM network element may send related session information of the UE to the SMF network element that corresponds to current serving UE and that is responsible for the local service. The related session information of the UE may include identification information of the L-SMF network element. After receiving the related session information of the UE, the SMF network element may obtain the identification information of the L-SMF network element from the related session information of the UE, and may establish the communication connection to the L-SMF network element based on the identification information of the L-SMF network element. It may be understood that before the UDM network element sends the related session information of the UE to the SMF network element, the SMF network element subscribes to the related session information of the UE from the UDM network element. For example, when the eighth message includes the information such as the S-NSSAI, the DNAI, or the DNN, the UDM network element may determine, based on the information such as the S-NSSAI, the DNAI, or the DNN included in the eighth message, whether to send the related session information of the UE to the SMF network element. If the information such as the S-NSSAI, the DNAI, or the DNN is the same as the locally cached information such as the S-NSSAI, the DNAI, or the DNN, the UDM network element may send the related session information of the UE to the SMF network element. Optionally, after the UE goes offline and goes online again, the UE sends the session creation request to a RAN device, and the RAN device sends the session creation request to the AMF network element. After receiving the session creation request, the AMF network element selects a corresponding SMF network element for the user session of the UE. Then, the AMF network element sends the session creation request to the SMF network element. For example, the session creation request may include at least one of the following: a tunnel identifier (for example, an uplink tunnel identifier or a downlink tunnel identifier) of the RAN device, the DNN, the S-NSSAI, or the like. It should be understood that, in a session creation process, information (for example, identification information) about the SMF network element corresponding to the UE and information (for example, identification information) about the AMF network element may be registered with the UDM network element.

Step 503: The L-SMF network element sends a first message to the SMF network element. Correspondingly, the SMF network element receives the first message from the L-SMF network element.

Optionally, for a related implementation process of step 404, refer to the related implementation process of step 201. Details are not described herein again.

Optionally, after step 503 is performed, in this embodiment of this application, step 504 to step 506 or step 507 and step 508 may be further performed. For example, if the L-SMF network element has a function of configuring an EASDF network element, the L-SMF network element configures the EASDF network element, and the L-SMF network element performs step 504 to step 506 to complete corresponding configuration of the EASDF network element. In this way, management complexity of a centralized control plane (for example, a centralized SMF network element) can be reduced. If the L-SMF network element does not have a function of configuring the EASDF network element, the SMF network element configures the EASDF network element, and the SMF network element may complete corresponding configuration of the EASDF network element by performing step 507 and step 508.

Step 504: The L-SMF network element selects an EASDF network element for a session of the UE.

Optionally, for a related implementation process of step 504, refer to the related implementation process of selecting the fifth network element by the second network element in step 202. Details are not described herein again.

Step 505: The L-SMF network element sends a sixth message to the EASDF network element. Correspondingly, the EASDF network element receives the sixth message from the L-SMF network element.

Optionally, for a related implementation process of step 505, refer to the related implementation process of sending the sixth message by the second network element to the fifth network element in step 202. Details are not described herein again.

Step 506: The L-SMF network element sends a seventh message to the SMF network element. Correspondingly, the SMF network element receives the seventh message from the L-SMF network element.

Optionally, for a related implementation process of step 506, refer to the related implementation process of sending the seventh message by the second network element to the first network element in step 202. Details are not described herein again.

Step 507: When the policy for accessing the local service by the UE does not include an addressing policy corresponding to the local service, and no EASDF network element is selected for the session of the UE, the SMF network element selects an EASDF network element for the session of the UE.

Optionally, for a related implementation process of step 507, refer to the related implementation process described in Example 2 in step 202. Details are not described herein again.

Step 508: The SMF network element sends a fourth message to the EASDF network element. Correspondingly, the EASDF network element receives the fourth message from the SMF network element.

Optionally, for a related implementation process of step 508, refer to the related implementation process of sending the fourth message by the first network element to the fifth network element in step 202. Details are not described herein again.

Step 509: The SMF network element sends address information of the EASDF network element to the UE. Correspondingly, the UE receives the address information of the EASDF network element from the SMF network element.

The address information (for example, an IP address) of the EASDF network element may be used by the UE to subsequently perform domain name query, for example, may be used by the UE to initiate a DNS request.

It should be understood that step 504 to step 509 are optional steps.

Step 510: The SMF network element determines a UL CL UPF network element.

Optionally, for a related implementation process of step 510, refer to the process of determining the third network element in step 202. Details are not described herein again.

Step 511: The SMF network element sends fourth information to the UL CL UPF network element. Correspondingly, the UL CL UPF network element receives the fourth information from the SMF network element.

For example, the fourth information may be an N4 session creation request.

Optionally, for a related implementation process of step 511, refer to the related implementation process of sending the fourth information by the first network element to the third network element in step 202. Details are not described herein again.

Step 512: The SMF network element sends first information to the L-SMF network element. Correspondingly, the L-SMF network element receives the first information from the SMF network element.

For example, the first information may be a session creation request.

Optionally, for a related implementation process of step 512, refer to the related implementation process of sending the first information by the first network element to the second network element in step 202. Details are not described herein again.

Step 513: The L-SMF network element sends sixth information to an L-PSA UPF network element. Correspondingly, the L-PSA UPF network element receives the sixth information from the L-SMF network element.

For example, the sixth information may be the N4 session creation request.

Optionally, for a related implementation process of step 513, refer to the related implementation process of sending the sixth information by the second network element to the sixth network element in step 202. Details are not described herein again.

Step 514: The L-PSA UPF network element sends seventh information to the L-SMF network element. Correspondingly, the L-SMF network element receives the seventh information from the L-PSA UPF network element.

For example, the seventh information may be a session creation response.

Optionally, for a related implementation process of step 514, refer to the related implementation process of sending the seventh information by the sixth network element to the second network element in step 202. Details are not described herein again.

Step 515: The L-SMF network element sends second information to the SMF network element. Correspondingly, the SMF network element receives the second information from the L-SMF network element.

Optionally, for a related implementation process of step 515, refer to the related implementation process of sending the second information by the second network element to the first network element in step 202. Details are not described herein again.

Step 516: The SMF network element sends third information to the UL CL UPF network element. Correspondingly, the UL CL UPF network element receives the third information from the SMF network element.

Optionally, for a related implementation process of step 516, refer to the related implementation process of sending the third information by the first network element to the third network element in step 202. Details are not described herein again.

Step 517: The SMF network element sends an eleventh message to the L-SMF network element. Correspondingly, the L-SMF network element receives the eleventh message from the SMF network element.

In this embodiment of this application, when the SMF network element sends the eleventh message to the L-SMF network element, a user plane tunnel for transmission of the local service data is established. For example, the eleventh message may be a session creation complete response. A ninth message may indicate that session creation is completed. Optionally, the SMF network element may also send the session creation complete response to the AMF network element.

Optionally, when step 504 to step 506 or step 507 and step 508 are performed, the SMF network element also needs to send the session creation complete response to the EASDF network element.

Optionally, when step 509 is performed, the EASDF network element needs to send a response message of a DNS request to the UE. The response message of the DNS request indicates that the user plane tunnel for transmission of the local service data is established, and the user may start to perform the local service.

It can be learned from step 501 to step 517 that the SMF network element may select, for the UE according to a classifier policy or the addressing policy that corresponds to the local service and that is provided by the L-SMF network element, a user plane network element managed by the SMF network element as the UL CL UPF network element, and may configure the classifier policy for the UL CL UPF network element. In this way, according to the method, a centralized SMF network element may not perceive deployment of the user plane network element, an application, and the like in the domain (or may be understood as local), and may not perceive a policy generation manner of a service of a user in the domain. In this way, management complexity of the centralized SMF network element and another centralized control plane network element can be effectively reduced. In addition, according to the method, when the L-SMF network element has the function of configuring the EASDF network element, the L-SMF network element can complete corresponding configuration of the EASDF network element. In this way, complexity of managing the local service by the centralized control plane can be effectively reduced. According to the method, when the L-SMF network element does not have the function of configuring the EASDF network element, the SMF network element may complete corresponding configuration of the EASDF network element.

It may be understood that, in comparison with that in the conventional technology, in the communication solution provided in step 501 to step 517, the L-SMF network element performs intra-domain user plane management and user policy management. In this way, direct management of a centralized control plane can be avoided, so that when user services (which may be understood as local services) are deployed/provisioned/changed in the domain, the centralized control plane may not perceive deployment/provision/change of local service policies or local service logic, to effectively reduce management complexity of the centralized control plane.

It should be noted that in descriptions of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first", "second", and "third" in embodiments of this application are used to distinguish between a plurality of objects, and are not used to limit a sequence, a time sequence, priorities, or importance degrees of the plurality of objects. In addition, the terms "include", "comprise", "have", and variations thereof that appear in this application all mean "including but not limited to", unless otherwise specifically emphasized in another manner.

In addition, it should be noted that each step in the foregoing embodiments may be performed by a corresponding device, or may be performed by a component like a chip, a processor, or a chip system in the device. This is not limited in embodiments of this application. The foregoing embodiments are described only by using an example in which each step is performed by the corresponding device.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

It should be noted that the "step" in embodiments of this application is merely an example, is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

The following are diagrams of possible structures of communication apparatuses according to embodiments of this application. These communication apparatuses may be configured to implement functions of the first network element, the second network element, the third network element, the fourth network element, the fifth network element, the sixth network element, the seventh network element, the eighth network element, the access network device, or the terminal device in the foregoing method embodiments. Therefore, beneficial effects of the foregoing method embodiments can also be implemented.

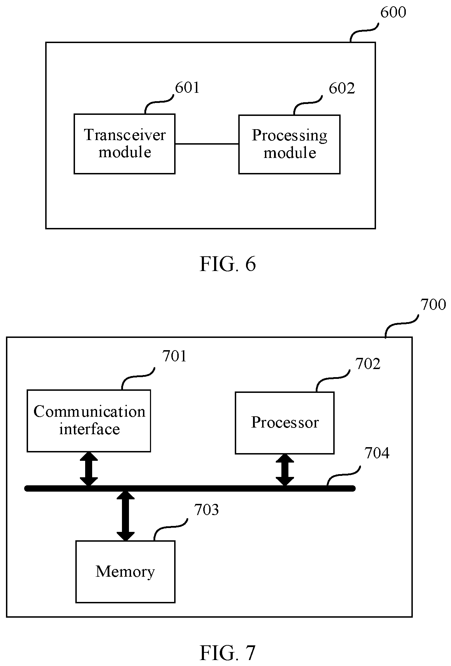

As shown in FIG. 6, a communication apparatus 600 includes a transceiver module 601 (which may alternatively be referred to as a communication module, a transceiver unit, or a communication unit, configured to send and receive data) and a processing module 602 (which may alternatively be referred to as a processing unit). The communication apparatus 600 is configured to implement functions of the first network element, the second network element, the third network element, the fourth network element, the fifth network element, the sixth network element, the seventh network element, the eighth network element, the access network device, or the terminal device in the method embodiment shown in FIG. 2, FIG. 4a and FIG. 4b, or FIG. 5a and FIG. 5b.

Optionally, the transceiver module 601 may include a receiving module and/or a sending module. The receiving module may be used by the communication apparatus 600 to receive a signal (information, data, or the like), and the sending module may be used by the communication apparatus 600 to send a signal (information, data, or the like). The sending module may send a signal (information, data, or the like) under control of the processing module 602, and the receiving module may receive a signal (information, data, or the like) under control of the processing module 602.

When the communication apparatus 600 is configured to implement a function of the first network element (for example, the SMF network element) in the method embodiment shown in FIG. 2, FIG. 4a and FIG. 4b, or FIG. 5a and FIG. 5b, the transceiver module 601 is configured to receive a first message from the second network element. The first message includes a policy for accessing the local service by the terminal device, and the second network element is configured to manage a local user plane function network element. The transceiver module 601 is further configured to send a second message to the third network element. The second message is used to configure a classifier policy corresponding to the local service, and the classifier policy is determined according to the policy for accessing the local service by the terminal device. The processing module 602 is configured to perform a corresponding processing operation, for example, configured to determine the third network element according to the classifier policy.

When the communication apparatus 600 is configured to implement a function of the second network element (for example, the L-SMF network element) in the method embodiment shown in FIG. 2, FIG. 4a and FIG. 4b, or FIG. 5a and FIG. 5b, the transceiver module 601 is configured to send a first message to a first network element. The first message includes a policy for accessing the local service by the terminal device. The processing module 602 is configured to perform a corresponding processing operation, for example, configured to select the fifth network element.

When the communication apparatus 600 is configured to implement a function of the third network element (for example, the UL CL UPF network element) in the method embodiment shown in FIG. 2, FIG. 4a and FIG. 4b, or FIG. 5a and FIG. 5b, the transceiver module 601 is configured to receive a second message from the first network element. The second message is used to configure a classifier policy for accessing the local service by the terminal device. The processing module 602 is configured to perform a corresponding processing operation, for example, configured to classify edge traffic on a PDU session to a local EAS.

When the communication apparatus 600 is configured to implement functions of the first network element, the second network element, the third network element, the fourth network element, the fifth network element, the sixth network element, the seventh network element, the eighth network element, the access network device, or the terminal device in the method embodiment shown in FIG. 2, FIG. 4a and FIG. 4b, or FIG. 5a and FIG. 5b, for more detailed descriptions of the transceiver module 601 and the processing module 602, refer to related descriptions of the first network element, the second network element, the third network element, the fourth network element, the fifth network element, the sixth network element, the seventh network element, the eighth network element, the access network device, or the terminal device in the method embodiment shown in FIG. 2, FIG. 4a and FIG. 4b, or FIG. 5a and FIG. 5b. Details are not described herein again.

It should be understood that the transceiver module 601 in this embodiment of this application may be implemented by using a communication interface or a communication interface-related circuit component, and the processing module 602 may be implemented by using a processor or a processor-related circuit component.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In another possible product form, as shown in FIG. 7, the communication apparatus 700 includes a communication interface 701 and a processor 702. Optionally, the communication apparatus 700 further includes a memory 703. The communication interface 701, the processor 702, and the memory 703 are connected to each other. When the communication apparatus 700 is configured to implement the technical solution related to the first network element (or the second network element, the third network element, the fourth network element, the fifth network element, the sixth network element, the seventh network element, the eighth network element, the access network device, or the terminal device) in the foregoing embodiments, the communication interface 701 may be configured to implement a function of the transceiver module 601 when performing the technical solution related to the first network element (or the second network element, the third network element, the fourth network element, the fifth network element, the sixth network element, the seventh network element, the eighth network element, the access network device, or the terminal device), the processor 702 is configured to implement a function of the processing module 602 when performing the technical solution related to the first network element (or the second network element, the third network element, the fourth network element, the fifth network element, the sixth network element, the seventh network element, the eighth network element, the access network device, or the terminal device).

Optionally, the communication interface 701, the processor 702, and the memory 703 are connected to each other through a bus 704. The bus 704 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used for representation in FIG. 7, but this does not mean that there is only one bus or only one type of bus.

The communication interface 701 is configured to receive and send data. For example, when the communication apparatus 700 is the terminal device (for example, UE) shown in FIG. 1a (or FIG. 1b), the communication interface 701 may communicate with the access network device (for example, a RAN device) shown in FIG. 1a (or FIG. 1b), or may communicate with another device (for example, another terminal device) outside the communication system architecture shown in FIG. 1a (or FIG. 1b). In an example, the communication interface may be a transceiver apparatus integrated with a data receiving and sending function. In another example, the communication interface may alternatively include a transmitter and a receiver. The transmitter is configured to send data, and the receiver is configured to receive data.

Optionally, the communication interface 701 may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 702. The receiver receives a signal, a message, information, data, or the like under control of the processor 702.

For a function of the processor 702, refer to descriptions of corresponding functions of the first network element, the second network element, the third network element, the fourth network element, the fifth network element, the sixth network element, the seventh network element, the eighth network element, the access network device, or the terminal device in the foregoing embodiments. Details are not described herein again. The processor 702 may be a central processing unit (central processing unit, CPU), a network processor (network processor, NP), a combination of the CPU and the NP, or the like. The processor 702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. When implementing the foregoing functions, the processor 702 may be implemented by hardware, or certainly may be implemented by hardware executing corresponding software.

The memory 703 is configured to store program instructions and the like. Specifically, the program instructions may include program code. The program code includes computer operation instructions. The memory 703 may include a random access memory (random access memory, RAM), or may further include a non-volatile memory (non-volatile memory), for example, at least one magnetic disk memory. The processor 702 executes program instructions stored in the memory 703, to implement the foregoing functions, to implement the method steps that need to be performed by the first network element, the second network element, the third network element, the fourth network element, the fifth network element, the sixth network element, the seventh network element, the eighth network element, the access network device, or the terminal device in the foregoing embodiments.

Based on a same concept, an embodiment of this application further provides a communication system. The communication system includes a plurality of communication apparatuses (for example, a plurality apparatuses among the first network element, the second network element, the third network element, the fourth network element, the fifth network element, the sixth network element, the seventh network element, the eighth network element, the access network device, or the terminal device). The first network element may be configured to implement the technical solution related to the first network element in the foregoing embodiment. The second network element may be configured to implement the technical solution related to the second network element in the foregoing embodiment. The third network element may be configured to implement the technical solution related to the third network element in the foregoing embodiment. The fourth network element may be configured to implement the technical solution related to the fourth network element in the foregoing embodiment. The fifth network element may be configured to implement the technical solution related to the fifth network element in the foregoing embodiment. The sixth network element may be configured to implement the technical solution related to the sixth network element in the foregoing embodiment. The seventh network element may be configured to implement the technical solution related to the seventh network element in the foregoing embodiment. The eighth network element may be configured to implement the technical solution related to the eighth network element in the foregoing embodiment. The access network device may be configured to implement the technical solution related to the access network device in the foregoing embodiment. The terminal device may be configured to implement the technical solution related to the terminal device in the foregoing embodiment.

Based on a same concept, an embodiment of this application further provides a computer program product. The computer program product includes a computer program or instructions. When the computer program or the instructions are run on a computer, the computer is caused to perform the method provided in the foregoing embodiments.

Based on a same concept, an embodiment of this application further provides a computer-readable storage medium. The computer-readable storage medium stores a computer program or instructions. When the computer program or the instructions are executed by a computer, the computer is caused to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on a same concept, an embodiment of this application further provides a chip. The chip may include a processor, and may further include a memory (or the chip is coupled to a memory). The chip executes program instructions in the memory, to perform the method provided in the foregoing embodiments. "Coupling" means that two components are directly or indirectly combined with each other. For example, coupling may mean an electrical connection between the two components.

Based on a same concept, an embodiment of this application further provides a chip system. The chip system includes a processor, configured to support a computer apparatus in implementing functions of the communication apparatus (for example, the first network element, the second network element, the third network element, the fourth network element, the fifth network element, the sixth network element, the seventh network element, the eighth network element, the access network device, or the terminal device) in the foregoing embodiments. In a possible implementation, the chip system further includes a memory. The memory is configured to store a program and data that are necessary for the computer apparatus. The chip system may include a chip, or may include a chip and another discrete component.

All or some of the methods in embodiments of this application may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The steps of the method described in embodiments of this application may be directly embedded into hardware, a software unit executed by a processor, or a combination thereof. The software unit may be stored in a RAM, a ROM, an EEPROM, a register, a hard disk, a removable magnetic disk, a CD-ROM, or a storage medium of any other form in the art. For example, the storage medium may connect to a processor so that the processor may read information from the storage medium and write information to the storage medium. Optionally, the storage medium may alternatively be integrated into the processor. The processor and the storage media may be disposed in an ASIC.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations provided that these modifications and variations of this application fall within the scope of the claims of this application and their equivalent technologies.

## Claims

1. A communication method, applied to a first network element, wherein the method comprises:
receiving a first message from a second network element, wherein the first message comprises a policy for accessing a local service by a terminal device, and the second network element is configured to manage a local user plane function network element; and
sending a second message to a third network element, wherein the second message is used to configure a classifier policy corresponding to the local service, and the classifier policy is determined according to the policy.

2. The method according to claim 1, wherein when the policy comprises the classifier policy, the second message comprises the classifier policy; or
when the policy does not comprise the classifier policy, the classifier policy is created according to the policy.

3. The method according to claim 1 or 2, wherein before receiving the first message from the second network element, the method further comprises:
receiving session information of the terminal device from a fourth network element, wherein the session information of the terminal device comprises information about the second network element; and
sending a third message to the second network element based on the information about the second network element, wherein the third message is used to obtain the policy.

4. The method according to claim 3, wherein before receiving the session information of the terminal device from the fourth network element, the method further comprises:
sending a first subscription message to the fourth network element, wherein the first subscription message is used to subscribe to the session information of the terminal device.

5. The method according to any one of claims 1 to 4, wherein the method further comprises:
if the policy does not comprise an addressing policy corresponding to the local service, and no fifth network element is selected for a session of the terminal device, selecting a fifth network element for the session of the terminal device;
sending a fourth message to the fifth network element, wherein the fourth message is used to configure the addressing policy corresponding to the local service, and the addressing policy is generated according to the policy; and
sending address information of the fifth network element to the terminal device, wherein the address information is used by the terminal device to subsequently perform domain name query.

6. The method according to claim 5, wherein the method further comprises:
receiving a fifth message from the fifth network element, wherein the fifth message comprises address information of a first application server, and the address information of the first application server is obtained through domain name query initiated by the terminal device; and
determining the third network element based on the fifth message.

7. The method according to any one of claims 1 to 4, wherein the method further comprises:
if the policy comprises the classifier policy, determining the third network element according to the classifier policy.

8. The method according to any one of claims 1 to 7, wherein the method further comprises:
sending first information to the second network element, wherein the first information is used to request to allocate an uplink tunnel identifier of a sixth network element, the first information comprises a downlink tunnel identifier of the third network element, and the sixth network element is a local user plane function network element;
receiving second information from the second network element, wherein the second information comprises the uplink tunnel identifier of the sixth network element; and
sending third information to the third network element, wherein the third information comprises the uplink tunnel identifier of the sixth network element, wherein
the downlink tunnel identifier of the third network element and the uplink tunnel identifier of the sixth network element are used to establish a first user plane tunnel corresponding to the local service between the third network element and the sixth network element.

9. The method according to any one of claims 1 to 8, wherein the method further comprises:
sending fourth information to the third network element, wherein the fourth information comprises a downlink tunnel identifier of an access network device;
receiving fifth information from the third network element; and
if the fifth information comprises an updated uplink tunnel identifier of the third network element, sending the updated uplink tunnel identifier to the access network device, wherein
the downlink tunnel identifier of the access network device and the updated uplink tunnel identifier are used to establish a second user plane tunnel corresponding to the local service between the access network device and the third network element.

10. A communication method, applied to a second network element, wherein the method comprises:
sending a first message to a first network element, wherein the first message comprises a policy for accessing a local service by a terminal device, wherein
the second network element is configured to manage a local user plane function network element.

11. The method according to claim 10, wherein before sending the first message to the first network element, the method further comprises:
receiving a third message from the first network element, wherein the third message is used to obtain the policy.

12. The method according to claim 10 or 11, wherein the method further comprises:
selecting a fifth network element;
sending a sixth message to the fifth network element, wherein the sixth message is used to configure an addressing policy corresponding to the local service, and the addressing policy is comprised in the policy; and
sending a seventh message to the first network element, wherein the seventh message comprises identification information and/or address information of the fifth network element, and the identification information and/or the address information of the fifth network element are/is used to establish a communication connection between the first network element and the fifth network element.

13. The method according to any one of claims 10 to 12, wherein the method further comprises:
receiving first information from the first network element, wherein the first information is used to request to allocate an uplink tunnel identifier of a sixth network element, the first information comprises a downlink tunnel identifier of a third network element, and the sixth network element is a local user plane function network element;
sending sixth information to the sixth network element, wherein the sixth information is used to request to allocate the uplink tunnel identifier of the sixth network element, and the sixth information comprises the downlink tunnel identifier of the third network element;
receiving seventh information from the sixth network element, wherein the seventh information comprises the uplink tunnel identifier of the sixth network element; and
sending second information to the first network element, wherein the second information comprises the uplink tunnel identifier of the sixth network element, wherein
the downlink tunnel identifier of the third network element and the uplink tunnel identifier of the sixth network element are used to establish a first user plane tunnel corresponding to the local service between the third network element and the sixth network element.

14. The method according to any one of claims 10 to 13, wherein sending the first message to the first network element comprises:
sending a second subscription message to a fourth network element, wherein the second subscription message is used to subscribe to session information of the terminal device;
receiving the session information of the terminal device from the fourth network element, wherein the session information of the terminal device comprises information about the first network element configured to provide a service for the terminal device; and
sending the first message to the first network element based on the information about the first network element.

15. The method according to any one of claims 10 to 13, wherein the method further comprises:
sending an eighth message to the fourth network element, wherein the eighth message comprises information about the second network element and identification information of the terminal device, and the eighth message is used to trigger establishment of a communication connection between the second network element and the first network element.

16. A communication method, applied to a third network element, wherein the method comprises:
receiving a second message from a first network element, wherein the second message is used to configure a classifier policy for accessing a local service by a terminal device.

17. The method according to claim 16, wherein the method further comprises:
receiving third information from the first network element, wherein the third information comprises an uplink tunnel identifier of a sixth network element, wherein
a downlink tunnel identifier of the third network element and the uplink tunnel identifier of the sixth network element are used to establish a first user plane tunnel corresponding to the local service between the third network element and the sixth network element.

18. The method according to claim 16 or 17, wherein the method further comprises:
receiving fourth information from the first network element, wherein the fourth information comprises a downlink tunnel identifier of an access network device; and
sending fifth information to the first network element, wherein the fifth information comprises an uplink tunnel identifier of the third network element or an updated uplink tunnel identifier of the third network element, wherein
the downlink tunnel identifier of the access network device and the uplink tunnel identifier of the third network element or the updated uplink tunnel identifier of the third network element are used to establish a second user plane tunnel corresponding to the local service between the access network device and the third network element.

19. A communication apparatus, comprising a module or a unit configured to perform the method according to any one of claims 1 to 9, or comprising a module or a unit configured to perform the method according to any one of claims 10 to 15, or comprising a module or a unit configured to perform the method according to any one of claims 16 to 18.

20. A communication apparatus, comprising:
a communication interface, configured to receive and send data;
a memory, configured to store computer program instructions and data; and
a processor, configured to invoke the computer program instructions and the data in the memory, to cause the communication apparatus to perform the method according to any one of claims 1 to 9, the method according to any one of claims 10 to 15, or the method according to any one of claims 16 to 18.

21. A communication system, comprising a first network element, a second network element, and a third network element, wherein
the first network element is configured to perform the method according to any one of claims 1 to 9;
the second network element is configured to perform the method according to any one of claims 10 to 15; and
the third network element is configured to perform the method according to any one of claims 16 to 18.

22. A computer-readable storage medium, wherein the computer-readable storage medium stores a computer program or instructions, and when the computer program or the instructions are executed by a computer, the computer is caused to perform the method according to any one of claims 1 to 9, the method according to any one of claims 10 to 15, or the method according to any one of claims 16 to 18.

23. A computer program product, wherein the computer program product comprises a computer program or instructions, and when the computer program or the instructions are run on a computer, the computer is caused to perform the method according to any one of claims 1 to 9, the method according to any one of claims 10 to 15, or the method according to any one of claims 16 to 18.

24. A chip, wherein the chip comprises a processor, and the chip is configured to execute program instructions in a memory, to perform the method according to any one of claims 1 to 9, the method according to any one of claims 10 to 15, or the method according to any one of claims 16 to 18.
